# EUROPEAN PATENT SPECIFICATION

(11) **EP 3 768 018 B1**
(45) Date of publication and mention of the grant of the patent: **06.11.2024**
(21) Application number: 19792646.2
(22) Date of filing: 18.04.2019
(51) Int. Cl.: H04W 72/04, H04W 72/12

(54) **SIGNAL TRANSMISSION METHOD APPLIED TO RELAY TECHNOLOGY AND RELATED DEVICE**
SIGNALÜBERTRAGUNGSVERFAHREN FÜR RELAISTECHNOLOGIE UND ZUGEHÖRIGE VORRICHTUNG
PROCÉDÉ D'ÉMISSION DE SIGNAL APPLIQUÉ À UNE TECHNOLOGIE DE RELAIS ET DISPOSITIF ASSOCIÉ

(30) Priority: 28.04.2018 CN 201810407505
(43) Date of publication of application: 20.01.2021
(73) Proprietor: Huawei Technologies Co., Ltd., Longgang District Shenzhen, Guangdong 518129 (CN)
(72) Inventor: TANG, Xiaoyong, Shenzhen, Guangdong 518129 (CN); QIU, Jing, Shenzhen, Guangdong 518129 (CN)
(74) Representative: Gill Jennings & Every LLP
(86) International application number: PCT/CN2019/083233
(87) International publication number: WO 2019/206019

(56) References cited:
- WO-A1-2016/078374
- US-A1- 2011 268 064
- US-A1- 2015 036 571
- US-A1- 2017 208 574
- US-A1- 2018 042 031
- NOKIA ET AL: "Dynamic resource allocation between backhaul and access links", vol. RAN WG1, no. Sanya, P.R. China; 20180416 - 20180420, 15 April 2018 (2018-04-15), XP051426891, Retrieved from the Internet <URL:http://www.3gpp.org/ftp/Meetings%5F3GPP%5FSYNC/RAN1/Docs/> [retrieved on 20180415]
- HUAWEI: "Physical Layer Enhancement on IAB", 3GPP TSG RAN WGI MEETING #92BIS, R1-1803695, 6 April 2018 (2018-04-06), XP051412962
- LG ELECTRONICS: "Discussions on NR IAB Support", 3 GPP TSG RAN WGI MEETING #92BIS, RI-1804583, 7 April 2018 (2018-04-07), XP051414004

## Description

### TECHNICAL FIELD

This application relates to the field of wireless communications, and in particular, to a signal transmission method applied to a relay technology and a related device.

### BACKGROUND

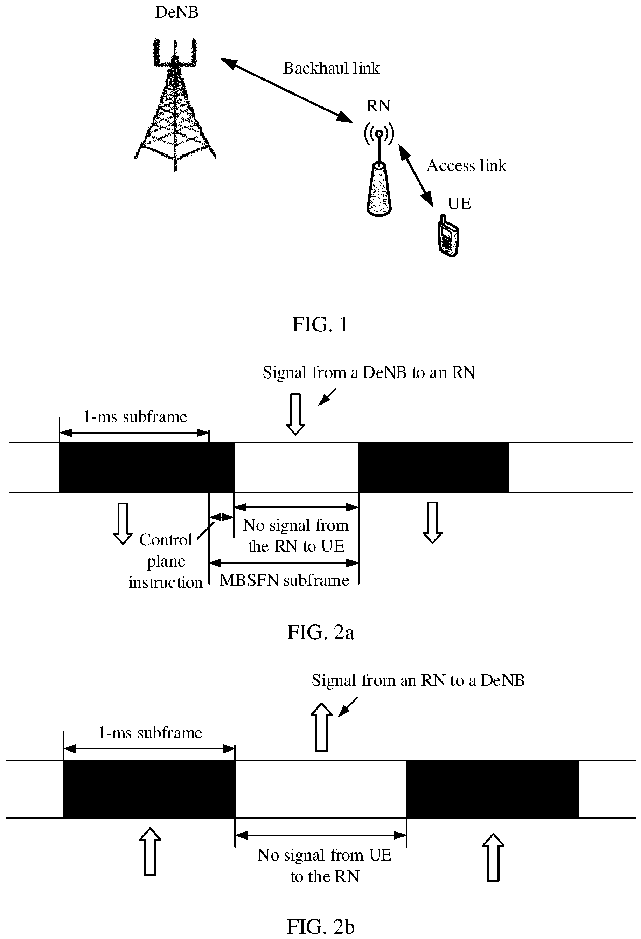

A relay (relaying) technology is introduced into a long term evolution (long term evolution, LTE) LTE system. In the relay technology, a relay node (relay node, RN) is deployed in a network to forward data between a base station (evolved NodeB, eNB) and a terminal (user equipment, UE), to increase a network capacity, implement a backhaul connection between base stations, and eliminate a coverage hole. FIG. 1 is a possible structural diagram of a network, including a donor eNB (donor eNB, DeNB), an RN, and UE. The RN is connected to the DeNB through a wireless interface, and the UE is connected to the RN or an eNB through a wireless interface. A link between the DeNB and the RN is referred to as a backhaul link, and a link between the RN and the UE is referred to as an access link. An integrated access and backhaul (integrated access and backhaul, IAB) technology is introduced into a 5th generation mobile communications (the 5th Generation, 5G) new radio (new radio, NR) system. IAB needs to more flexibly support resource sharing between the access link and the backhaul link. Therefore, a manner such as a time division multiplexing (time division multiplexing, TDM) mode, a frequency division multiplexing (frequency division multiplexing, FDM) mode, or a space division multiplexing (space division multiplexing, SDM) mode is introduced for multiplexing manners of the backhaul link and the access link, to flexibly share resources.

However, in an IAB scenario, when a relay node A sends a signal in the TDM mode, a relay node B receives a signal in the SDM mode, and the relay node A is relatively close to the relay node B, the signal sent by the relay node A interferes with the signal received by the relay node B, causing cross-link interference.

To avoid the cross-link interference, in the prior art, relay nodes frequently exchange measurement information to coordinate sending/receiving behavior between the relay nodes, to avoid mutual interference between the relay nodes.

However, in the prior art, frequent signaling exchange occupies a relatively large quantity of channel resources. When there are a relatively large quantity of relay nodes, high overheads are caused for management of cross-link interference between the relay nodes. Therefore, how to implement low-overhead cross-link interference management is a problem that urgently needs to be resolved currently.

US 2015/0036571 A1 describes a communication system including a plurality of eNodeBs (eNBs) configured to serve one or more user equipments (UEs). The plurality of eNBs includes a first eNB and a second eNB. The first eNB is configured to wirelessly communicate on a resource with the second eNB. The resource includes a time resource and/or a frequency resource. The first and second eNBs are configured to cooperatively serve the one or more UEs. The first and second eNBs are configured to engage in wireless communication following a predetermined schedule known to the plurality of eNBs. All eNBs can be configured to exchange control messages with neighboring eNBs for interference coordination. Control messages can include interference reduction messages which can be used for interference coordination. Interference reduction messages can indicate a channel quality between a UE and an eNB (such as first or second eNB). Control messages can also include UE scheduling information based on the interference reduction message.

US 2017/0208574 A1 describes relay node capable of supporting wireless backhaul communication which includes a controller configured to identify a first timing of a backhaul downlink (DL) transmission and a second timing of an access uplink (UL) transmission to be substantially aligned, and a transceiver configured to receive at least one first symbol in the backhaul DL transmission from an base station (BS), and receive at least second symbol in an access UL transmission from a user equipment (UE). The controller is further configured to substantially align a third timing of a backhaul uplink (UL) transmission and a fourth timing of an access downlink (DL) transmission, wherein the transceiver is further configured to transmit at least third symbol in a backhaul uplink (UL) transmission to the BS, and transmit at least fourth symbol in the access DL transmission to the UE.

### SUMMARY

Embodiments of this application provide a signal transmission method applied to a relay technology and a related device, to implement low-overhead cross-link interference management.

A first aspect of the embodiments of this application provides a signal transmission method as set out in claim 1. The method ensures that when performing the backhaul transmission, the first relay node is free from cross-link interference between the second relay node and the first relay node, and low-overhead cross-link interference management can be implemented without complex pilot resource scheduling.

In a possible design, in a first implementation of the first aspect of the embodiments of this application, when the time resource that is indicated by the first signal and that needs to be occupied by the first relay node to perform the backhaul transmission overlaps or partially overlaps a time resource that needs to be occupied by the second relay node to perform the backhaul transmission, and/or interference caused by the first relay node to the second relay node is greater than a preset threshold, the second relay node receives/sends the signal on the another resource, where the another resource is the resource other than the time resource that needs to be occupied by the first relay node to perform the backhaul transmission. In this implementation, a condition that needs to be met when the second relay node performs transmission is refined, so that the embodiments of this application are more specific.

In a possible design, in a second implementation of the first aspect of the embodiments of this application, the first signal includes a pilot signal, and the pilot signal carries the information about the time resource that needs to be occupied by the first relay node to perform the backhaul transmission, and the receiving/sending status of the first relay node during the backhaul transmission. In this implementation, the first signal received by the second relay node is generated by the first relay node by combining the existing pilot signal and information about the backhaul transmission of the first relay node, thereby ensuring reliability of transmission between the first relay node and the second relay node.

In a possible design, in a third implementation of the first aspect of the embodiments of this application, the first signal includes a pilot signal, the information about the time resource that needs to be occupied by the first relay node to perform the backhaul transmission, and the receiving/sending status of the first relay node during the backhaul transmission. In this implementation, the first signal received by the second relay node is generated by the first relay node by separating the existing pilot signal from information about the backhaul transmission of the first relay node, so that the second relay node can directly obtain the information about the backhaul transmission of the first relay node, thereby improving efficiency of receiving and parsing the first signal by the second relay node.

In a possible design, in a fourth implementation of the first aspect of the embodiments of this application, the first signal further includes but is not limited to one or more of the following information: information about a periodicity for performing the backhaul transmission by the first relay node, and an interference detection threshold. In this implementation, the first signal may further include other information, for example, the information about the periodicity for performing the backhaul transmission by the first relay node, so that the second relay node can perform avoidance processing in each periodicity, and the first relay node does not need to send a first message for indication each time, thereby reducing signaling overheads between the first relay node and the second relay node.

In a possible design, in a fifth implementation of the first aspect of the embodiments of this application, when the first signal carries the information about the periodicity for performing the backhaul transmission by the first relay node, the method further includes: storing, by the second relay node, the information about the periodicity for performing the backhaul transmission by the first relay node, the information about the time resource that needs to be occupied by the first relay node to perform the backhaul transmission, and the receiving/sending status of the first relay node during the backhaul transmission. In this implementation, when the first signal carries the information about the periodicity for performing the backhaul transmission by the first relay node, the second relay node may store the information about the periodicity for performing the backhaul transmission by the first relay node, to periodically perform avoidance processing, thereby reducing signaling overheads between the first relay node and the second relay node.

A second aspect of the embodiments of this application provides a signal transmission method as set out in claim 6. The first relay node sends the first signal in a broadcast manner, so that a second relay node that receives the first signal may determine, based on the received first signal, that when the receiving/sending status of the first relay node during the backhaul transmission is different from a receiving/sending status of the second relay node during backhaul transmission, the second relay node may perform avoidance processing on the first relay node, for example, receive/send a signal at a position other than a time resource position indicated by the first signal, to ensure that when performing the backhaul transmission, the first relay node is free from cross-link interference between the second relay node and the first relay node, and low-overhead cross-link interference management can be implemented without complex pilot resource scheduling.

In a possible design, in a first implementation of the second aspect of the embodiments of this application, before the sending, by the first relay node, the first signal, the method further includes: determining, by the first relay node, a first resource position; and the sending, by the first relay node, the first signal includes: sending, by the first relay node, the first signal at the first resource position. In this implementation, the first relay node further needs to determine the first resource position used to send the first signal, so that the second relay node that receives the first signal identifies the first signal as a preemption signal.

In a possible design, in a second implementation of the second aspect of the embodiments of this application, the determining, by the first relay node, a first resource position includes: determining, by the first relay node, the first resource position based on a broadcast message, where the broadcast message carries information about a predefined resource position, the information about the predefined resource position includes information about a plurality of resource positions, and the first resource position is included in the plurality of resource positions; or determining, by the first relay node, the first resource position based on a dedicated configuration message, where the dedicated configuration message carries identification information of the first relay node, and the dedicated configuration message includes position information of the first resource position. In this implementation, a manner in which the first relay node determines the first resource position is provided, including: determining the first resource position based on the broadcast message or determining the first resource position based on the dedicated configuration message, so that the embodiments of this application are more operable.

In a possible design, in a third implementation of the second aspect of the embodiments of this application, the first signal includes a pilot signal, and the pilot signal carries the information about the time resource that needs to be occupied by the first relay node to perform the backhaul transmission, and the receiving/sending status of the first relay node during the backhaul transmission. In this implementation, the first signal is generated by the first relay node by combining the existing pilot signal and information about the backhaul transmission of the first relay node, thereby ensuring reliability of transmission between the first relay node and the second relay node.

In a possible design, in a fourth implementation of the second aspect of the embodiments of this application, the first signal includes a pilot signal, the information about the time resource that needs to be occupied by the first relay node to perform the backhaul transmission, and the receiving/sending status of the first relay node during the backhaul transmission. In this implementation, the first signal is generated by the first relay node by separating the existing pilot signal from information about the backhaul transmission of the first relay node, so that the second relay node can directly obtain the information about the backhaul transmission of the first relay node, thereby improving efficiency of receiving and parsing the first signal by the second relay node.

In a possible design, in a fifth implementation of the second aspect of the embodiments of this application, the first signal further includes but is not limited to one or more of the following information: information about a periodicity for performing the backhaul transmission by the first relay node, and an interference detection threshold. In this implementation, the first signal may further include other information, for example, the information about the periodicity for performing the backhaul transmission by the first relay node, so that the second relay node can perform avoidance processing in each periodicity, and the first relay node does not need to send a first message for indication each time, thereby reducing signaling overheads between the first relay node and the second relay node.

A third aspect of the embodiments of this application provides a communications device. The communications device has a function of implementing behavior of the first relay node or behavior of the second relay node in the foregoing method designs. The function may be implemented by hardware, or may be implemented by hardware by executing corresponding software. The hardware or the software includes one or more modules corresponding to the function. The modules may be software and/or hardware.

In a possible implementation, the communications device includes a storage unit, a processing unit, and a communications unit.

The storage unit is configured to store program code and data that are necessary for the communications device. The processing unit is configured to invoke the program code to control and manage an action of the communications device. The communications unit is configured to support communication between the communications device and another device.

In a possible implementation, a structure of the communications device includes a processor, a communications interface, a memory, and a bus. The communications interface, the processor, and the memory are connected to each other by using the bus. The communications interface is configured to support communication between the communications device and another device. The memory is configured to store program code and data that are necessary for the communications device. The processor is configured to invoke the program code to support the first relay node or the second relay node in performing a corresponding function in the foregoing method.

The method according to any one of the first aspect or the second aspect may be applied to the following scenarios: In a single-chain system, a first node and a second node are connected to each other across nodes, and there is no direct backhaul link or access link between the first node and the second node. For example, the first node and the second node may be separated by one or more relay nodes for communication. In a multi-chain system, the first node and the second node may be separately located on different links, or the first node and the second node are located on a same link. In this case, a connection relationship between the first node and the second node is similar to a connection relationship between the first node and the second node in the single-chain system. Details are not described herein again. The apparatuses according to the foregoing aspects may also be applied to the scenarios described herein.

It can be learned from the foregoing technical solutions that the embodiments of this application have the following advantages: After receiving the first signal broadcast by the first node, the second node obtains the information about the time resource that needs to be occupied by the first node to perform the backhaul transmission and the receiving/sending status of the first node during the backhaul transmission that are included in the first signal. When the receiving/sending status of the second node during the backhaul transmission is different from the receiving/sending status of the first node during the backhaul transmission, the second node unit may not receive/send the signal at the time resource position indicated by the first signal. Therefore, it is ensured that when performing the backhaul transmission, the first node is free from the cross-link interference between the second node and the first node, and the low-overhead cross-link interference management can be implemented without the complex pilot resource scheduling.

### BRIEF DESCRIPTION OF DRAWINGS

FIG. 1 is a structural diagram of a network of an existing possible relay system;
FIG. 2a is a schematic diagram of possible backhaul transmission according to an embodiment of this application;
FIG. 2b is a schematic diagram of other possible backhaul transmission according to an embodiment of this application;
FIG. 2c is a structural diagram of a network of another possible relay system according to an embodiment of this application;
FIG. 3a is a schematic diagram of possible cross-link interference in a TDD system according to an embodiment of this application;
FIG. 3b is a schematic diagram of possible cross-link interference according to an embodiment of this application;
FIG. 3c is a schematic diagram of other possible cross-link interference according to an embodiment of this application;
FIG. 4a is a diagram of a possible system architecture according to an embodiment of this application;
FIG. 4b is a diagram of another possible system architecture according to an embodiment of this application;
FIG. 5a is a flowchart of a signal transmission method applied to a relay technology according to an embodiment of this application;
FIG. 5b is a schematic diagram of a possible predefined resource position according to an embodiment of this application;
FIG. 5c is a schematic diagram of another possible predefined resource position according to an embodiment of this application;
FIG. 5d is a schematic diagram of another possible predefined resource position according to an embodiment of this application;
FIG. 5e is a schematic diagram of another possible predefined resource position according to an embodiment of this application;
FIG. 6 is a schematic diagram of an embodiment of a possible communications device according to an embodiment of this application;
FIG. 7 is a schematic diagram of another embodiment of a possible communications device according to an embodiment of this application;
FIG. 8 is a schematic block diagram of a communications device according to an embodiment of this application;
FIG. 9 is a schematic structural diagram of a communications device according to an embodiment of this application;
FIG. 10 is a structural block diagram of a possible network device according to an embodiment of this application; and
FIG. 11 is a structural block diagram of a possible terminal according to an embodiment of this application.

### DESCRIPTION OF EMBODIMENTS

Embodiments of this application provide a signal transmission method applied to a relay technology and a related device, to implement low-overhead cross-link interference management.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device. The following clearly describes the technical solutions in the embodiments of this application with reference to the accompanying drawings in the embodiments of this application. Clearly, the described embodiments are merely some but not all of the embodiments of this application.

In the relay technology, how to schedule backhaul data needs to be considered. Due to a half-duplex constraint of an RF component, a relay node cannot send and receive signals at the same time. To be specific, the relay node cannot receive a signal when sending a signal, and cannot send a signal when receiving a signal. In this application, such a conflict between signal sending and receiving may be referred to as a sending and receiving conflict. With reference to FIG. 1, to avoid a sending and receiving conflict, in a relay solution of an LTE system, a backhaul link and an access link of a relay node cannot perform transmission at the same time.

FIG. 2a and FIG. 2b are schematic diagrams of possible backhaul transmission. As shown in FIG. 2a, a DeNB sends a predetermined multicast-broadcast single-frequency network (multicast-broadcast single-frequency network, MBSFN) subframe, and the MBSFN subframe includes a control plane instruction and a downlink signal of a backhaul link between the DeNB and an RN, namely, a signal from the DeNB to the RN. In addition, in this MBSFN subframe, there is no downlink signal of an access link between the RN and UE. In other words, the MBSFN subframe does not include a signal from the RN to the UE. As shown in FIG. 2b, the RN sends an uplink subframe to the DeNB, and the uplink subframe includes an uplink signal of the backhaul link between the DeNB and the RN, namely, a signal from the RN to the DeNB. In addition, in this uplink subframe, the RN does not schedule an uplink signal of the access link between the RN and the UE. In other words, the uplink subframe does not include a signal from the UE to the RN. Therefore, by using this mechanism, each of downlink transmission and uplink transmission on the backhaul link between the DeNB and the RN achieves an objective of exclusively occupying a resource, thereby avoiding a sending and receiving conflict of the access link between the RN and the UE, and all relay nodes are kept synchronized with a base station for easy management. This solution is simple and easy to implement. However, all the relay nodes are required to use a same mode (frame structure and TDM slot) to transmit data with the base station. Consequently, a differentiation problem of a bearer service between relay nodes cannot be well resolved. For example, some relay nodes have heavy uplink load and need more uplink resources, but some relay nodes have heavy downlink load and need more downlink resources.

However, in an IAB scenario, to flexibly share resources of the access link and the backhaul link, an operating mode of each relay node may be dynamically adjusted based on related information (such as service load, link quality, and an antenna capability). For ease of understanding, using an antenna capability as an example, if a relay node has a large total quantity of antennas, some antennas may be used to receive a signal of the backhaul link, and some antennas may be used to receive a signal of the access link, to implement spatial multiplexing of the backhaul link and the access link. However, when a relay node has a relatively small quantity of antennas, for example, there is only one antenna, the relay node can operate only in a TDM mode or an FDM mode.

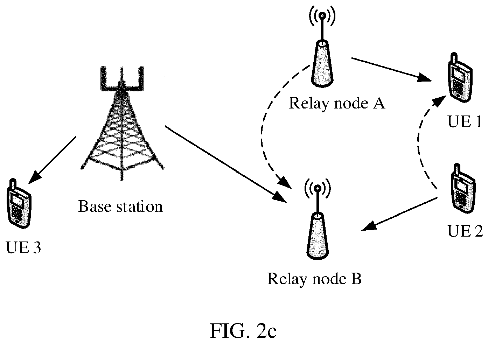

Therefore, in an IAB scenario, there may be a case in which a relay node operates in the TDM mode, and a relay node operates in an SDM mode. As shown in FIG. 2c, for a relay node A operating in a TDM mode, due to a hardware limitation, the relay node A can use only a half-duplex mode, and therefore cannot perform receiving and sending at the same time, a frame structure of the relay node A is entirely synchronized with that of a base station. For example, in an access link slot, the base station sends a signal to UE 3, and the relay node A also sends a signal to UE 1. For a relay node B operating in an SDM mode, a frame structure of the relay node B is contrary to that of the base station. For example, when the base station sends a signal to the relay node B, the relay node B receives the signal sent by the base station, and also receives a signal sent by UE 2. Therefore, when the relay node A operates in the TDM mode and sends data, the relay node B operates in the SDM mode and receives data, and the two relay nodes are relatively close to each other, severe cross-link interference is caused (a signal sent by the relay node A severely interferes with a signal received by the relay node B). Therefore, to avoid cross-link interference between relay nodes, interference link information needs to be measured in advance by using a pilot, and then the cross-link interference is avoided based on the interference link information.

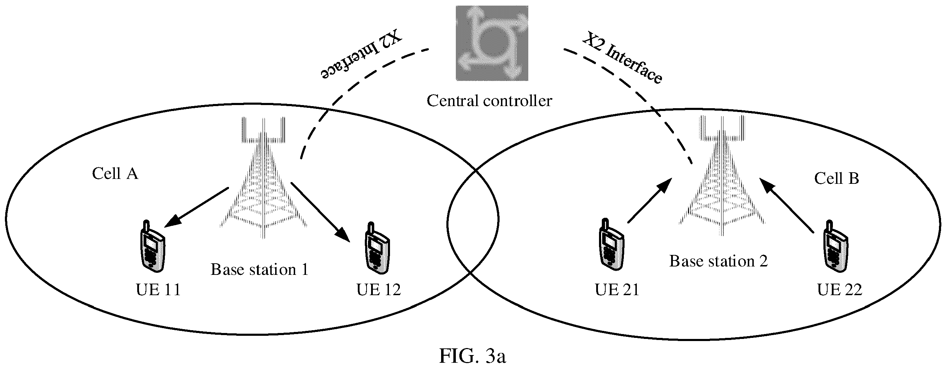

A dynamic TDD technology also relates to cross-link interference. As shown in FIG. 3a, two neighboring cells including a cell A and a cell B are coordinated by a central controller. Assuming that a base station 1 in the cell A is in a sending state, and a base station 2 in the cell B is in a receiving state, when UE 12 in the cell A receives a signal sent by the base station 1, UE 21 in the cell B sends a signal to the base station 2. Therefore, the UE 12 is interfered with by the UE 21, and the base station 1 also causes interference to the base station 2. Therefore, the cross-link interference may be avoided in the following manners.
1. A semi-persistent interference measurement method: A receiving frame structure is predefined, and link measurement between a plurality of nodes by using a predefined receiving/sending behavior and time is coordinated. In addition, a sending/receiving behavior between base stations is coordinated based on information about the link measurement between the nodes, to avoid mutual interference. In the prior art, measurement information (for example, beam information) needs to be frequently exchanged between base stations through an X2 interface, and an interference beam pair is avoided by using a centralized scheduling algorithm.
2. Dynamic interference measurement: A clear to send (clear to send, CTS) listening signal is added during data transmission. For example, before receiving data, UE served by the base station 1 first sends an occupation signal CTS, and UE in the cell B listens to whether the CTS signal is received. If receiving the CTS signal, the UE that receives the CTS signal in the cell B does not send a signal, so that the UE (sending an uplink signal) served by the base station 2 is prevented from interfering with the UE (receiving a downlink signal) served by the base station 1.

It should be noted that in an IAB scenario, sources of the cross-link interference are more complex. In addition to the cross-link interference caused by inconsistent frame directions of base stations in a dynamic TDD system, the following interference sources are further included.

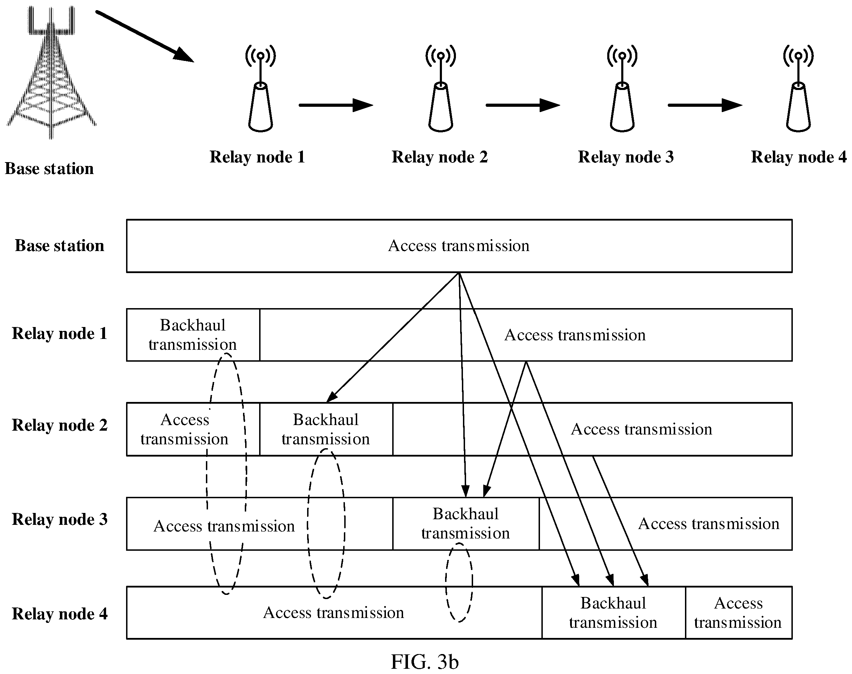

Interference source A: Misalignment of allocated backhaul link slots of nodes and misalignment of allocated access link slots of the nodes cause additional cross-link interference. FIG. 3b is a possible schematic diagram of a single chain structure. As shown in FIG. 3b, assuming that all access signals are in a sending state, for relay nodes, all backhaul link slots in which the relay nodes are located are in a receiving state. It is assumed that a link relationship between the nodes is a chain structure, and a lower-level node is controlled by an upper-level node (for example, resource scheduling, data transmission, random access). For example, in FIG. 3b, a relay node 1 is controlled by a base station, and a relay node 2 is controlled by the relay node 1 or the base station.

It can be learned that in a multi-hop system network, the base station interferes with receiving of backhaul signals of the relay node 2 to a relay node 4 (the relay node 1 is a lower-level node directly managed by the base station, and there is no interference problem). Likewise, the relay node 2 to the relay node 4 cause interference to a backhaul signal of the relay node 1 (a lower-level node cannot coordinate a resource of an upper-level node).

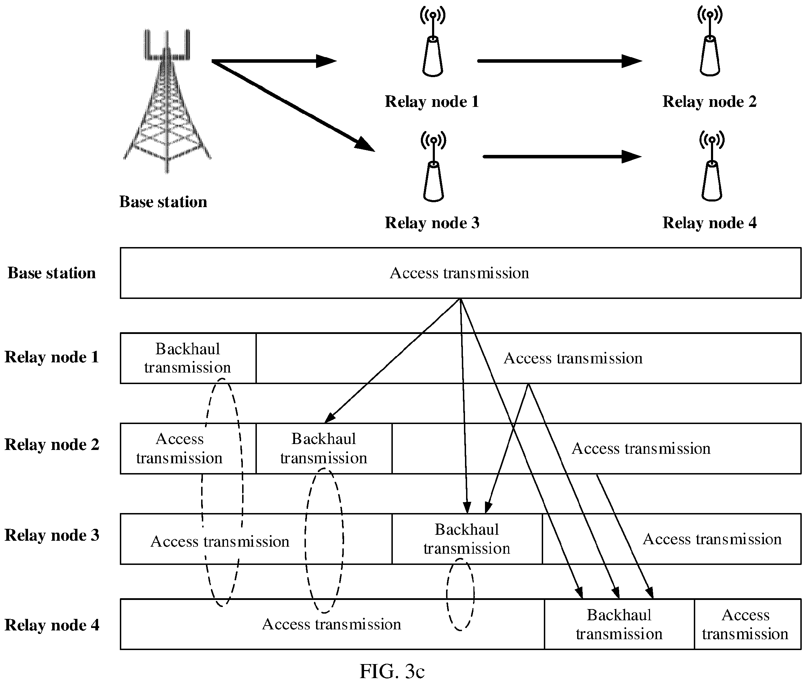

Interference source B: Similarly, if a topology structure of an entire network is expanded to a plurality of chain structures, interference between a plurality of links is also included. As shown in FIG. 3c, FIG. 3c is a possible schematic diagram of a plurality of chain structures, and interference between two links may include:
1. If backhaul link slots (positions or duration) of a relay node 1 and a relay node 3 are not aligned, the relay node 1 changes to the sending state after a backhaul link slot while the relay node 3 is still in a backhaul link slot, in other words, the relay node 3 is still in the receiving state. In this case, the relay node 1 interferes with the relay node 3.
2. Interference between a relay node 2 and a relay node 4 is further, in addition to cross-link interference caused by inconsistency of backhaul link slots of the relay node 2 and the relay node 4, limited by impact of an upper level (a base station, the relay node 1, or the relay node 3).

In the foregoing network scenarios, it can be learned that complex cross-link interference is largely caused by inconsistency of backhaul link slots of relay nodes, and a severer random interference problem is caused in dynamic resource coordination. Features of dynamic resources are as follows:
1. Each relay node may dynamically allocate a backhaul link slot and an access link slot based on service load and link quality of the relay node.
2. After a backhaul link and access link allocation slot configuration on the relay node changes, if positions of a backhaul link slot and an access link slot of the relay node are not aligned with those of another node, additional cross-link interference is caused.

Therefore, in the IAB scenario, how to implement low-overhead cross-link interference management, in other words, how to avoid complex inter-node pilot resource coordination, measurement content exchange, scheduling coordination, and the like, needs to be resolved urgently.

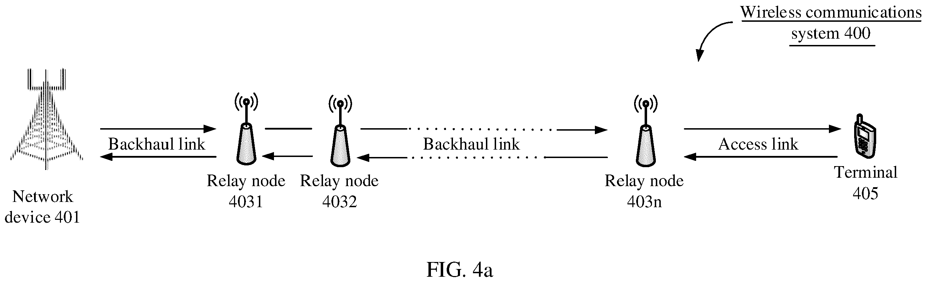

In view of this, an embodiment of this application provides a signal transmission method applied to a relay system, and the method may be applied to a wireless communications system. The wireless communications system may be an LTE system, a 5G system, a machine-to-machine (machine-to-machine, M2M) communications system, or the like, and is not specifically limited herein. For ease of understanding, FIG. 4a is an architectural diagram of an example of a single-chain system according to an embodiment of this application. A wireless communications system 400 may include a network device 401, a terminal 405, and relay nodes 4031 to 403n. The relay nodes between the network device 401 and the terminal 405 may be configured to forward a radio signal between the network device 401 and the terminal 405. Specifically, during downlink transmission, the relay nodes are responsible for forwarding a radio signal transmitted by the network device 401, to finally transmit the radio signal to the terminal 405. During uplink transmission, the relay nodes are responsible for forwarding a radio signal transmitted by the terminal 405, to finally transmit the radio signal to the network device 401. It should be noted that a radio link between the network device 401 and a relay node 4031 or a radio link between the relay node 4031 and a relay node 4032 is a backhaul link (backhaul link, BH), and the backhaul link includes an uplink (uplink, UL) backhaul link and/or a downlink. (downlink, DL) backhaul link. A radio link between a relay node 403n and the terminal 405 is an access link (access link), and the access link includes an uplink access link and/or a downlink access link.

In addition, the wireless communications system 400 further includes a single-hop relay system or a multi-hop relay system. In the multi-hop relay system, with reference to FIG. 4a, there are at least two relay nodes, for example, the relay node 4031 and the relay node 4032, between the network device 401 and the terminal 405. However, in the single-hop relay system, there is only one relay node, for example, the relay node 4031, between the network device 401 and the terminal 405.

Persons skilled in the art may understand that the network device may be configured to communicate with one or more terminals, or may be configured to communicate with one or more network devices having some terminal functions, for example, communication between a macro base station and a micro base station, where the micro base station may be an access point. The network device may be a base transceiver station (base transceiver station, BTS) in a time division-synchronous code division multiple access (time division-synchronous code division multiple access, TD-SCDMA) system, or may be an evolved NodeB (evolved NodeB, eNB) in an LTE system, or a base station gNB in a 5G system or an NR system. In addition, the network device may alternatively be an access point (access Point, AP), a transmission reception point (transmission reception point, TRP), a central unit (central unit, CU), or another network entity, and may include some or all of functions of the foregoing network entities.

The relay node may be a base station that provides a relay function, for example, a micro base station; or the relay node may be a terminal that provides a relay function; or the relay node may be a network entity such as a relay transmission/reception node, customer-premises equipment (customer-premise equipment, CPE), a relay transceiver, a relay agent, a TRP, or a relay transmission reception point (relay TRP, rTRP). During specific implementation, the relay nodes may be distributed at an edge of a cell, and coverage of the network device may be expanded.

The terminal may be a device that provides a user with voice and/or data connectivity, a handheld device with a wireless connection function, or another processing device connected to a wireless modem. The terminal may communicate with one or more core networks through a radio access network (radio access network, RAN). The terminal may be static or mobile. For example, the terminal may be a mobile device, a mobile station (mobile station), a mobile unit (mobile unit), an M2M terminal, a radio unit, a remote unit, a user agent, a mobile client, a handheld device, a smartwatch, a notebook computer, a tablet computer, a smart band, or the like.

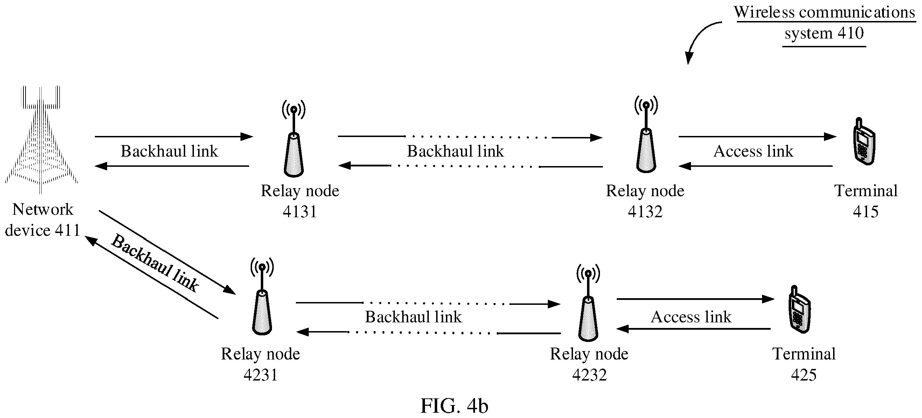

In addition, embodiments of this application may be applied to not only the possible single-chain system architecture shown in FIG. 4a, but also a possible multi-chain system architecture shown in FIG. 4b. As shown in FIG. 4b, a wireless communications system 410 includes a network device 411, a relay node 4131, a relay node 4132, a terminal 415, a relay node 4231, a relay node 4232, a terminal 425, and the like. The foregoing multi-chain may be understood as that communication between the network device 411, the relay node 4131, the relay node 4132, and the terminal 415 is one chain, and communication between the network device 411, the relay node 4231, the relay node 4232, and the terminal 425 is also one chain. In other words, the multi-chain may be considered to include a plurality of single chains under a same network device, and a quantity of the single chains is not limited. In addition, there may be one or more relay nodes on each single chain, and a quantity of relay nodes on each single chain may be the same or different.

It should be noted that the wireless communications system 400 shown in FIG. 4a is merely intended to describe the technical solutions in this application more clearly, but is not intended to limit this application. Persons of ordinary skill in the art may know that as a network architecture evolves and a new service scenario emerges, the technical solutions provided in this application are also applicable to a similar technical problem.

To facilitate description of the embodiments of this application, the following describes terms appearing in this application.

In a possible implementation, a first node is at least one node on a link from a network device to a terminal, and a second node is at least one node other than the first node on the link from the network device to the terminal. The first node may be an upper-level node or an upstream node of the second node, or the second node may be an upper-level node or an upstream node of the first node. Certainly, the first node may also be a peer node of the second node. In other words, there is no hierarchical relationship between the first node and the second node. It should be noted that peer nodes described herein may be two nodes that do not directly communicate with each other, or two independent nodes are simultaneously linked to one upper-level node or a same lower-level node, or the like.

It should be noted that the first node and the second node in this application may be network devices, relay nodes, terminals, or the like. Therefore, types of the first node and the second node are not specifically limited herein.

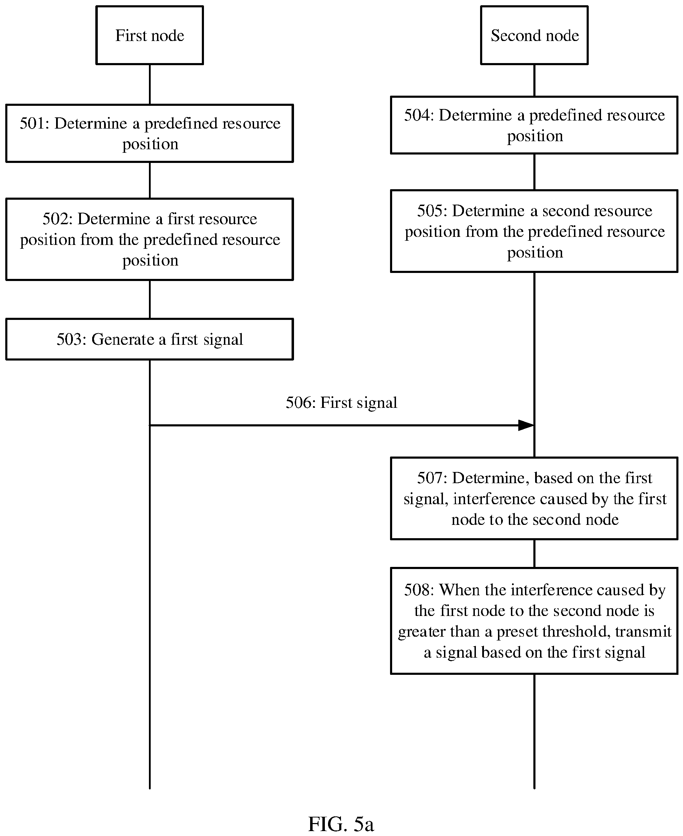

With reference to FIG. 5a, a method embodiment of a signal transmission method applied to a relay technology according to an embodiment of this application is described. For ease of understanding, the following briefly describes this embodiment separately with reference to the system framework diagrams shown in FIG. 4a and FIG. 4b.

The single-chain system architecture shown in FIG. 4a is used as an example. It is assumed that the relay node 4031 that directly communicates with the network device 401 is a first node, and a node other than the first node on the link is a second node. The network device 401 may send a broadcast message. The broadcast message carries information about a predefined time-frequency resource position, and the information about the predefined time-frequency resource position is used by each node to perform backhaul transmission or access transmission at a predefined position. When needing to perform backhaul transmission, the first node may determine a receiving/sending status of the first node at the predefined time-frequency resource position based on the broadcast message, and determine a time-frequency resource position corresponding to a sending state of the receiving/sending status as a first resource position. Further, the first node sends a first signal at the first resource position. The first signal includes a slot position that needs to be occupied by the first node to perform the backhaul transmission. To be specific, it may be understood as a declaration to each second node that the slot position that needs to be occupied by the first node to perform the backhaul transmission is a protected transmission slot position. Therefore, after the second node receives the first signal, if the first node causes interference to the second node, the second node may perform avoidance processing at the protected transmission slot position declared in the first signal, for example, transmit no signal at the protected transmission slot position, to reduce cross-link interference between the first node and the second node.

A multi-chain system architecture shown in FIG. 4b is used as an example. In the multi-chain system, interference between links further exists. It is assumed that the relay node 4232 that directly communicates with the terminal 425 is a first node. In this case, when a backhaul link slot of the relay node 4132 that directly communicates with the terminal 415 and a backhaul link slot of the first node overlap but are not aligned on a link on which the terminal 415 is located, the relay node 4132 interferes with backhaul transmission of the first node. Therefore, all nodes except the first node in the wireless communications system 410 are second nodes. Therefore, when the first node needs to perform the backhaul transmission, similar to that in FIG. 4a, the first node also sends a first signal at a first resource position, to indicate, to each second node, a slot position that needs to be occupied by the first node to perform the backhaul transmission, so that after the second node receives the first signal, if the first node causes interference to the second node, the second node may perform avoidance processing at a protected transmission slot position declared in the first signal, for example, transmit no signal at the protected transmission slot position, to reduce cross-link interference between the first node and the second node.

It should be noted that, in this embodiment of this application, the protected transmission slot position may be not only the slot position that needs to be occupied by the first node to perform the backhaul transmission, but also a slot position that needs to be occupied by the first node to perform access transmission. Therefore, in this application, transmission that is of the first node and that needs to be protected from the cross-link interference may be referred to as to-be-protected transmission. To be specific, the to-be-protected transmission may be the backhaul transmission of the first node or the access transmission of the first node, and a slot position occupied to perform the to-be-protected transmission is the protected transmission slot position. For ease of description, in this embodiment, an example in which the to-be-protected transmission is the backhaul transmission of the first node is used for specific description with reference to steps shown in FIG. 5a. The following steps are included.

501: The first node determines a predefined resource position.

In a wireless network, nodes including a network device, a relay node, a terminal, and the like may establish a radio link to each other by using a random access procedure, to implement information exchange and complete subsequent operations such as a call operation, a resource request operation, and a data transmission operation. For example, the relay node sends an uplink connection establishment request message to the network device, where the message includes a relay identifier used to distinguish the relay node from the terminal, so that the network device enables, based on the relay identifier, an initiator node to access a network. To be specific, when the initiator node is the relay node, the relay node accesses a network according to a rule of the relay node; or when the initiator node is the terminal, the terminal accesses a network according to a rule of the terminal. The uplink connection establishment request message may include a newly added field used to distinguish the relay node from the terminal. For example, the uplink connection establishment request message is identified by using one bit. When a value of the bit is "0", it indicates that the uplink connection establishment request message is from the terminal. When a value of the bit is "1", it indicates that the uplink connection establishment request message is from the relay node. It should be noted that the prior art may be used for a random access procedure in this embodiment of this application, and details are not described herein.

After a transmission channel between nodes is established, if one of the nodes needs to perform backhaul transmission, to ensure that the backhaul transmission is not interfered with, the node needs to send a first signal to another node in the wireless network, and the first signal includes information about a time resource position occupied by the node to perform the backhaul transmission. After receiving the first signal, if determining that the node causes interference to the another node, the another node may perform avoidance processing at the time resource position indicated by the first signal. In this application, for ease of description, the node that sends the first signal is referred to as the first node, and the another node that receives the first signal is referred to as the second node.

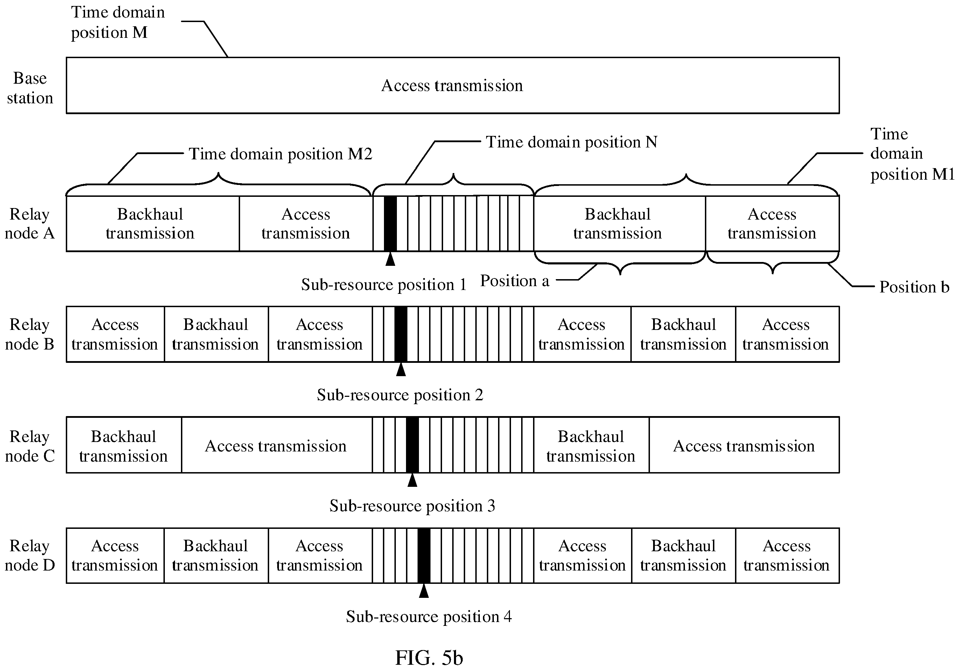

Before sending the first signal, the first node needs to determine a resource position used to send the first signal, namely, the first resource position. A manner in which the first node determines the first resource position may include: (1) The first node first determines the predefined resource position, and the predefined resource position includes a plurality of sub-resource positions. FIG. 5b is a schematic diagram of a possible predefined resource position according to an embodiment of this application. In FIG. 5b, within a time domain range, a base station configures time domain positions M1 and M2 and a time domain position N. The time domain positions M1 and M2 are used by relay nodes (a relay node A and a relay node B) to perform backhaul transmission and access transmission. The time domain position N is the predefined resource position. The predefined resource position includes a plurality of sub-resource positions, and the plurality of sub-resource positions are used by the relay nodes to send a broadcast signal or listen to a broadcast signal sent by another relay node. For example, for the relay node A, a position a in the time domain position M1 is used by the relay node A to perform backhaul transmission, a position b is used by the relay node A to perform access transmission, and the relay node A may send a broadcast signal at a sub-resource position 1 in the predefined resource position, the another relay node listens to, at the sub-resource position 1, the broadcast signal sent by the relay node A. In addition, at a position, in the predefined resource position, other than the sub-resource position 1, the relay node A listens to the broadcast signal sent by the another relay node. For example, the relay node A listens to, at a sub-resource position 2, a broadcast signal sent by the relay node B, listens to, at a sub-resource position 3, a broadcast signal sent by a relay node C, and listens to, at a sub-resource position 4, a broadcast signal sent by a relay node D. (2) After determining the predefined resource position, the first node determines the first resource position based on the predefined resource position. The first resource position is included in the plurality of sub-resource positions. For example, in FIG. 5b, if the first node is the relay node B, the first resource position is the sub-resource position 2. A resource position in this embodiment of this application may be a time domain position, a frequency domain position, or the like.

It should be noted that when the first node periodically performs backhaul transmission that needs to be protected, the first resource position used to send the first signal may be between time resource positions occupied by two backhaul transmissions. With reference to FIG. 5b, it is assumed that the first node is the relay node A, the time domain position M2 includes a time resource that needs to be occupied by the first node to perform an n^{th} backhaul transmission, the time domain position M1 includes a time resource that needs to be occupied by the first node to perform an (n+1)^{th} backhaul transmission, and the sub-resource position 1 used by the first node to send the first signal is between the time domain position M2 and the time domain position M1. If the first node is possibly interfered with by the another node when performing the n^{th} backhaul transmission, the interference may be ignored, and the first node sends the first signal to ensure that the (n+1)^{th} backhaul transmission and backhaul transmission in a subsequent period are not interfered with. Optionally, the first resource position used to send the first signal may alternatively be before a time resource position that needs to be occupied by the first node to perform periodic backhaul transmission.

To be specific, after sending the first signal, the first node starts to perform the first periodic backhaul transmission.

It should be noted that in this embodiment of this application, the first node determines the predefined resource position in a plurality of manners, including:

Manner 1: The first node determines the predefined resource position based on the broadcast message.
The first node receives the broadcast message. There may be a plurality of types of information that are used by the first node to determine the predefined resource position and that are carried in the broadcast message. It may be understood that different information carried in the broadcast message indicates different manners used by the first node to determine the predefined resource position. The following examples are used.

Manner 1a: When the broadcast message carries information about the predefined resource position, the first node may directly obtain the predefined resource position by parsing the broadcast message.

Manner 1b: When the broadcast message carries a resource position determining rule, the first node may determine the predefined resource position according to the resource position determining rule. The resource position determining rule may be a first mapping relationship between identification information of a base station connected to each node and a predefined resource position of each node, and the first mapping relationship may be indicated in a form of a table or a formula. For example, the predefined resource position determined by the first node = f(identification information of a base station connected to the first node). Therefore, for a base station, if resource position determining rules used by all nodes within a service range of the base station are the same, predefined resource positions determined by all the nodes are also the same.

Optionally, the broadcast message may further carry information such as periodicity information of the predefined resource position. This is not specifically limited herein.

It should be noted that, in this embodiment of this application, an existing management frame such as a beacon (Beacon) frame or a probe request (Probe Request) frame in the 802.11 standard may be used for the broadcast message. This is not specifically limited herein.

Manner 2: The first node determines the predefined resource position based on a dedicated configuration message.

The first node receives a dedicated configuration message sent by a third node. The dedicated configuration message carries identification information of the first node, and the identification information of the first node may be a media access control (media access control, MAC) address of the first node. The third node is an upper-level node of the first node. To be specific, the third node may be a network device or a relay node.

Similar to the broadcast message in the manner 1, there may be a plurality of types of information that are used by the first node to determine the predefined resource position and that are carried in the dedicated configuration message. Therefore, the first node may determine the predefined resource position based on the dedicated configuration message in a plurality of manners. The following examples are used.

Manner 2a: When the dedicated configuration message further carries information about the predefined resource position, the first node may perform modulation and decoding processing on the dedicated configuration message to directly obtain the predefined resource position.

The modulation and decoding processing may be understood as follows: To improve data transmission efficiency and reduce a bit error rate, in actual application, a transmit end, namely, the third node in this application, may sequentially perform operations such as encoding, modulation, resource mapping, inverse fast Fourier transform, and cyclic prefix (cyclic prefix, CP) addition on the dedicated configuration message, and then transmit the dedicated configuration message to a receive end, namely, the first node in this application through a channel. Therefore, correspondingly, after receiving the dedicated configuration message sent by the third node, the first node sequentially performs CP removal, fast Fourier transform, data extraction, channel estimation, equalization, demodulation, and decoding processing on the received dedicated configuration message. In this application, an existing technical means may be used to perform the modulation and decoding processing on the dedicated configuration message. Details are not described in this application.

Manner 2b: When the dedicated configuration message further carries a resource position determining rule, the first node may determine and obtain the predefined resource position according to the resource position determining rule.

Optionally, the dedicated configuration message may further carry other information such as periodicity information of the predefined resource position. This is not specifically limited herein.

In conclusion, in this embodiment of this application, the first node determines the predefined resource position in the plurality of manners. This is not specifically limited herein.

502: The first node determines the first resource position from the predefined resource position.

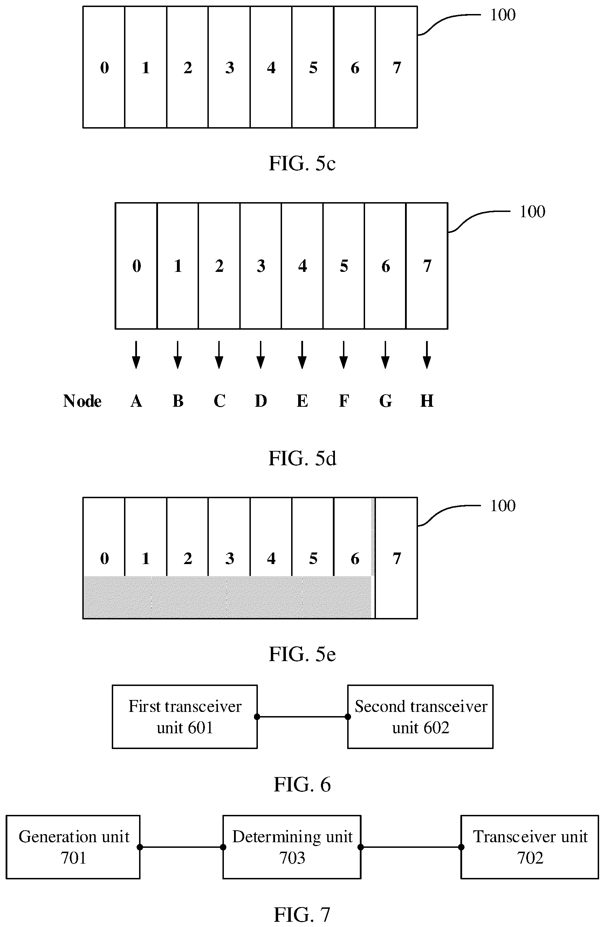

After determining the predefined resource position, the first node finds, from the predefined resource position, the first resource position used to send the first signal. For ease of understanding, FIG. 5c is a schematic diagram of a possible predefined resource position 100. The predefined resource position 100 includes a plurality of sub-resource positions 0 to 7. Therefore, the first node determines a receiving/sending status of the first node at the plurality of sub-resource positions 0 to 7, and determines, as the first resource position, a corresponding sub-resource position used when the first node is in a sending state.

It should be noted that the receiving/sending status in this embodiment of this application includes a receiving state and the sending state. For example, when the receiving/sending status of the first node at a sub-resource position is the receiving state, the first node listens to, at the sub-resource position, a signal sent by the another node. When the receiving/sending status of the first node at a sub-resource position is the sending state, the first node sends the broadcast signal at the sub-resource position.

Similar to the manner in which the first node determines the predefined resource position in step 501, the first node may also determine a receiving/sending status of the first node at the predefined resource position based on the broadcast message or the dedicated configuration message that is of the third node, including:
Manner 1: The first node determines the receiving/sending status of the first node at the predefined resource position based on the broadcast message.

There may be a plurality of types of information that are used by the first node to determine the receiving/sending status and that are carried in the broadcast message received by the first node. Therefore, the first node determines the receiving/sending status based on the broadcast message in a plurality of manners. The following examples are used.

Manner 1a: When the broadcast message carries information about the receiving/sending status of each node at the predefined resource position, the first node directly determines the receiving/sending status of the first node at the predefined resource position based on the information about the receiving/sending status of each node at the predefined resource position. For example, the information about the receiving/sending status of each node at the predefined resource position may be information about a corresponding sub-resource position used when each node is in the sending state. Therefore, the first node finds a position used when the first node is in the sending state, namely, the first resource position, and listens to a signal at a position, in the predefined resource position, other than the first resource position. For ease of understanding, FIG. 5d is a schematic diagram of another possible predefined resource position based on FIG. 5c. The plurality of sub-resource positions 0 to 7 respectively correspond to identification information of nodes A to H, indicating that the node A is in the sending state at the sub-resource position 0, the node B is in the sending state at the sub-resource position 1, ..., and the node H is in the sending state at the sub-resource position 7. Therefore, for the node A, a receiving/sending status of the node A at the predefined resource position 100 is that the node A is in the sending state at the sub-resource position 0 and is in the receiving state at the sub-resource positions 1 to 7. In this case, a first resource position of the node A is the sub-resource position 0.

Optionally, the information, carried in the broadcast message, about the receiving/sending status of each node at the predefined resource position may alternatively be a corresponding sub-resource position used when each node is in the receiving state. Therefore, the first node finds a position used when the first node is in the receiving state, and determines another position in the predefined resource position as the first resource position, or determines, as the first resource position, the corresponding sub-resource position used when each node is in the receiving state, the corresponding sub-resource position used when each node is in the sending state, or the like. This is not specifically limited herein.

Manner 1b: When the broadcast message carries a rule for determining a receiving/sending status at a predefined resource position, the first node determines the receiving/sending status of the first node at the predefined resource position according to the rule for determining a receiving/sending status at a predefined resource position. The rule for determining a receiving/sending status at a predefined resource position may be a second mapping relationship between a cell identity (identity, ID) of a cell in which each node is located or a physical ID such as a MAC address of each node and the receiving/sending status at the predefined resource position, and the second mapping relationship may also be indicated in a form of a table or a formula. For example, the corresponding sub-resource position used when each node is in the sending state = f(the cell ID, a character string that corresponds to each node). To be specific, one cell may include a plurality of nodes, and the nodes correspond to different character strings, so that corresponding sub-resource positions used when the nodes in the cell are in the sending state are different from each other. The character string may be number information of each node, identification information configured by a base station serving the cell for each node, or the like. Therefore, the first node may determine the first resource position based on a cell ID of a cell in which the first node is located and a character string corresponding to the first node, and listen to a signal at a position other than the first resource position in the predefined resource position. Alternatively, the corresponding sub-resource position used when each node is in the sending state = f(the physical ID of each node). Therefore, the first node determines the first resource position based on a physical ID of the first node.

Optionally, the rule for determining a receiving/sending status at a predefined resource position may be configured by the network device and broadcast to each node. To be specific, different rules for determining a receiving/sending status at a resource position may be used for different wireless communications networks. Alternatively, the rule for determining a receiving/sending status at a predefined resource position is specified in a protocol. To be specific, a same rule for determining a receiving/sending status at a resource position may be used for different wireless communications networks. Therefore, a manner in which the first node obtains the rule for determining a receiving/sending status at a predefined resource position includes: The rule is obtained by receiving the broadcast message, or is specified in the protocol. This is not specifically limited herein.

Manner 2: The first node determines the receiving/sending status of the first node at the predefined resource position based on the dedicated configuration message.

The dedicated configuration message that is sent by the third node and that is received by the first node not only carries the identification information of the first node, but also may carry different information used by the first node to determine the receiving/sending status. Therefore, the first node determines the receiving/sending status based on the dedicated configuration message in a plurality of manners, including:
Manner 2a: When the dedicated configuration message carries information about the receiving/sending status of the first node at the predefined resource position, the first node directly obtains the information about the receiving/sending status of the first node at the predefined resource position based on the dedicated configuration message. For example, as shown in FIG. 5c, when there are eight sub-resource positions, a 3-bit field may be set in the dedicated configuration message, and the 3-bit field is used to indicate a number of a corresponding sub-resource position used when the first node is in the sending state. When a bit value of the field is "010", the first node is in the sending state at a sub-resource position 2. To be specific, the first resource position of the first node is the sub-resource position 2, and the first node is in the receiving state at a position other than the sub-resource position 2. Alternatively, the dedicated configuration message may further include all information about the receiving/sending status of the first node at the plurality of sub-resource positions. For example, FIG. 5e is a schematic diagram of another possible predefined resource position based on FIG. 5c. A plurality of sub-resource positions 0 to 7 respectively correspond to the receiving/sending status of the first node. To be specific, the first node is in the receiving state at the sub-resource positions 0 to 6. The first node is in the sending state at the sub-resource position 7. In other words, the first resource position of the first node is the sub-resource position 7.
Manner 2b: When the dedicated configuration message carries a dedicated receiving/sending status determining rule of the first node, the first node determines the receiving/sending status of the first node at the predefined resource position according to the dedicated receiving/sending status determining rule. The dedicated receiving/sending status determining rule may be a third mapping relationship between the physical ID of the first node and the receiving/sending status of the first node at the predefined resource position, and the third mapping relationship may be indicated in a form of a table or a formula. For example, the corresponding sub-resource position used when the first node is in the sending state = f(the physical ID of the first node). Therefore, the first node determines that the corresponding sub-resource position used when the first node is in the sending state is the first resource position, and determines to listen to a signal at another sub-resource position.

It should be noted that, in a wireless communications network, dedicated receiving/sending status determining rules for nodes may be the same or may be different. This is not specifically limited herein.

In conclusion, the first node determines the receiving/sending status at the predefined resource position in a plurality of manners. Correspondingly, the first node determines the first resource position in a plurality of manners. This is not specifically limited herein.

503: The first node generates the first signal.

It should be noted that the base station may separately configure, for each node in the wireless network, transmission time information corresponding to the node, where the transmission time information may include transmission time information (for example, a backhaul link slot) used for backhaul transmission and transmission time information (for example, an access link slot) used for access transmission, and deliver the transmission time information to each node. For example, the base station delivers transmission time information corresponding to the first node to the first node.

Therefore, after the first node obtains the transmission time information of the first node that is configured by the base station, to protect the first node from interference during backhaul transmission, the first node generates the first signal based on information about the backhaul transmission of the first node. The first signal includes information about a time resource that needs to be occupied by the first node to perform the backhaul transmission and a receiving/sending status of the first node during the backhaul transmission. Therefore, after receiving the first signal sent by the first node, the second node obtains, based on the first signal, the information about the time resource that needs to be occupied by the first node to perform the backhaul transmission and the receiving/sending status of the first node during the backhaul transmission. If the second node determines that the receiving/sending status of the first node during the backhaul transmission is different from a receiving/sending status of the second node during backhaul transmission, and the first node causes interference to the second node, the second node may perform avoidance processing at a time resource position indicated by the first signal, for example, may not receive/send a signal, to ensure that when performing the backhaul transmission, the first node is free from cross-link interference between the first node and the second node.

Optionally, the first signal may further include but is not limited to one or more of the following information: information about a periodicity for performing the backhaul transmission by the first node, and an interference detection threshold.

It should be noted that the first signal may carry complete information used when the first node performs the backhaul transmission, for example, the information about the time resource that needs to be occupied by the first node to perform the backhaul transmission, the information about the periodicity for performing the backhaul transmission by the first node, the interference detection threshold, and the receiving/sending status of the first node during the backhaul transmission. Alternatively, the first signal may carry partial information used during the backhaul transmission. For example, when the information about the backhaul transmission of the first node changes, the first signal may carry only a changed part. To be specific, if the information about the periodicity for performing the backhaul transmission by the first node changes, the first node broadcasts the first signal, to send changed information about a periodicity to each second node.

For ease of understanding, the foregoing information in the first signal is separately described.

The information about the time resource that needs to be occupied by the first node to perform the backhaul transmission is used by the first node to indicate, to the second node, a time domain resource position that needs to be protected by the first node. The information about the time resource may be identification information of the time domain resource position that needs to be protected. For example, there are six slots, and corresponding identification information is respectively 0 to 5. If time domain resource positions that need to be protected are a slot 1, a slot 2, and a slot 5, the information about the time resource may be [1, 2, 5].

Alternatively, the information about the time resource may be a bitmap of the time domain resource position that needs to be protected. For example, if there are six slots, time domain resource positions that need to be protected may be indicated by using six bits. The six bits sequentially correspond to the six slots. To be specific, a bit 0 corresponds to a slot 0, a bit 1 corresponds to a slot 1, and so on. When a single bit value is 0, it indicates that a corresponding slot does not need to be protected. When a single bit value is 1, it indicates that a corresponding slot needs to be protected. Therefore, if the time domain resource positions that need to be protected are the slot 1, the slot 2, and the slot 5, the information about the time resource may be 011001.

Alternatively, the information about the time resource may be a start position and an end position of the time domain resource position that needs to be protected, or a start position and duration of the time domain resource position that needs to be protected.

Alternatively, the information about the time resource may be a time offset, and the time offset is a time interval between the time domain resource position that needs to be protected and a time domain resource position at which the first node sends the first signal, so that the second node can determine, based on the time offset, the time domain resource position that needs to be protected. For example, the time domain resource position that needs to be protected = a time resource position occupied by the second node to perform the backhaul transmission + the time offset, or the time domain resource position that needs to be protected = a time resource position occupied by the second node to perform the backhaul transmission - the time offset.

Therefore, there may be a plurality of types of specific content of the information about the time resource. This is not limited in this application.

The information about the periodicity for performing the backhaul transmission by the first node is used to describe a periodicity in which the backhaul transmission occurs. The information about the periodicity may be an absolute time (for example, 2s), a quantity of slots (for example, 10 slots), a quantity of frames (for example, 10 frames), a quantity of subframes (for example, 10 subframes), and/or a quantity of symbols (for example, 10 symbols).

It should be noted that in actual application, the information about the periodicity is an optional parameter. If the first signal does not include the information about the periodicity for performing the backhaul transmission by the first node, before performing backhaul transmission each time, the first node needs to notify the second node of a time resource that needs to be occupied by the first node to perform the backhaul transmission.

The interference detection threshold is used to determine a magnitude of interference between the first node and the second node. The interference detection threshold may be one or more of the following information: a reference signal received power (reference signal received power, RSRP), a received signal strength indicator (Received Signal Strength Indicator, RSSI), a signal-to-noise ratio (signal-to-noise ratio, SNR), or a path loss (path loss) value.

It should be noted that the interference detection threshold may be configured by the base station in a unified manner, or configured by the first node, or specified in the protocol. This is not specifically limited herein.

The receiving/sending status of the first node during the backhaul transmission is used to indicate, to the second node, whether the first node is in the receiving state or in the sending state during the backhaul transmission.

The foregoing describes meanings of various types of information that may be included in the first signal. The following describes how the first node generates the first signal. In this embodiment of this application, the first node generates the first signal in a plurality of manners. For example, the first node generates the first signal based on a pilot signal. The pilot signal is known data transmitted on several carriers of an orthogonal frequency division multiplexing (orthogonal frequency division multiplexing, OFDM) symbol. For ease of description, in this embodiment of this application, it is assumed that the first signal carries target information. In addition to the information about the time resource that needs to be occupied by the first node to perform the backhaul transmission and the receiving/sending status of the first node during the backhaul transmission, the target information may further include but is not limited to one or more of the following information: the information about the periodicity for performing the backhaul transmission by the first node and the interference detection threshold. Therefore, a manner in which the first node generates the first signal based on the pilot signal includes:

Generation manner 1: The pilot signal and the target information are used as two pieces of separated information to generate the first signal. To be specific, the generated first signal includes the pilot signal and the target information. For ease of understanding, if the pilot signal and the target information in the first signal may be located at different time domain positions, for example, the first resource position used to send the first signal is a slot 1 to a slot 3, the pilot signal is located in the slot 1, and the target information is located in the slot 2 and the slot 3.

Generation manner 2: The pilot signal and the target information are combined to generate the first signal. To be specific, the first node generates the pilot signal including the target information, and the generated pilot signal is the first signal. For ease of understanding, a generation manner corresponding to the first signal may be as follows: The first signal = f(the pilot signal, the target information). For example, the first node may obtain the first signal through combination in a manner of scrambling the existing pilot signal by using the target information. For example, the first node multiplies a sequence corresponding to the pilot signal by a sequence corresponding to the target information, to generate the first signal.

It should be noted that the pilot signal may be a sounding reference signal (sounding reference signal, SRS), a demodulation reference signal (demodulation reference signal, DMRS), a synchronization signal and PBCH block (synchronization signal and PBCH block, SSB) signal, a channel state information reference signal (channel-state information-reference signal, CSI-RS), or the like.

For ease of understanding, an example in which the pilot sequence signal is an SSB signal is used to describe the manner in which the pilot signal and the target information are combined to generate the first signal. For example, if the SSB signal occupies 72 resource elements (resource element, RE), the target information may be separately carried at two ends of the 72 REs, for example, the information about the time resource that needs to be occupied by the first node to perform the backhaul transmission is carried in the first RE, and the information about the periodicity for performing the backhaul transmission by the first node and the interference detection threshold are respectively carried in the 71^{st} RE and the 72^{nd} RE, to form a new SSB signal, namely, the first signal.

In conclusion, in this embodiment of this application, the first node generates the first signal in the plurality of manners. This is not specifically limited herein.

In addition, the first node may periodically generate the first signal, for example, generate the first signal once every 10 ms or 20 ms. In other words, the first node may broadcast the first signal once every 10 ms or 20 ms. Alternatively, the first node may temporarily generate the first signal. For example, when the information about the backhaul transmission of the first node changes, the first node temporarily generates the first signal to temporarily notify the second node of changed information through broadcasting.

It should be noted that, in this embodiment of this application, the first node determines the first resource position through step 502, and the first node generates the first signal through step 503. There is no step sequence between the two processes. To be specific, step 502 may be performed first, or step 503 may be performed first, or the two steps may be performed simultaneously. This is not specifically limited herein.

504: The second node determines a predefined resource position.

In this embodiment of this application, a manner in which the second node determines the predefined resource position in step 504 is similar to the manner in which the first node determines the predefined resource position in step 501. Details are not described herein again.

505: The second node determines a second resource position from the predefined resource position.

After determining the predefined resource position, the second node determines the second resource position from the predefined resource position. The second resource position is a corresponding sub-resource position, in the predefined resource position, used when the second node is in the receiving state. To be specific, the second node listens to a signal at the second resource position.

It should be noted that, in this embodiment of this application, the first node determines the first resource position through step 501 and step 502, and the second node determines the second resource position through step 504 and step 505. There is no step sequence between the two processes. To be specific, step 501 and step 502 may be first performed, or step 504 and step 505 may be performed first, or step 501 and step 502 and step 504 and step 505 may be performed simultaneously. This is not specifically limited herein.

506: The first node sends the first signal to the second node.

After determining the first resource position, the first node sends the first signal through a broadcast channel, so that the second node receives, at the second resource position, the first signal sent by the first node at the first resource position.

It should be noted that a beam used by the first node to send the first signal may be a beam used when the first node performs the backhaul transmission. Therefore, the second node may detect, based on the beam used by the first node to send the first signal, whether there is the cross-link interference between the second node and the first node when the first node performs the backhaul transmission.

It may be understood that the first node generates the first signal in the plurality of manners, and the first node may send the first signal in a plurality of manners. Therefore, corresponding to the manner in which the first node generates the first signal, a manner in which the first node sends the first signal to the second node includes:

Sending manner 1: When the pilot signal and the target information are separated to generate the first signal, the first node may separately send the pilot signal and the target information to the second node in a manner such as time division multiplexing, frequency division multiplexing, or code division multiplexing (code division multiplexing, CDM). For example, when the first node sends the first signal to the second node in the time division multiplexing manner, assuming that the first resource position is a slot 1 to a slot 3, the first node may send the pilot signal in the slot 1, and send the target information in the slot 2 and the slot 3. When the first node sends the first signal to the second node in the frequency division multiplexing manner, at the same time, it is assumed that a frequency band occupied by the first node to send the pilot signal is f1, a frequency band occupied to send the information about the periodicity for performing the backhaul transmission by the first node in the target information is f2, a frequency band occupied to send the interference detection threshold in the target information is f3, and so on. When the first node sends the first signal to the second node in the code division multiplexing manner, the first node sends the pilot signal by using a chip sequence (chip sequence) 1, and sends the target information by using a chip sequence 2, and the chip sequence 1 and the chip sequence 2 are different from each other and orthogonal to each other.

Sending manner 2: When the pilot signal and the target information are combined to generate the first signal, the first node sends a pilot signal obtained after generation, namely, the first signal to the second node at the first resource position. In frequency domain, a frequency at which the first node sends the first signal may be a specific frequency used to send the pilot signal, for example, 229.5 MHz or any other frequency. When the first node generates the first signal by scrambling the pilot signal by using the target information, after receiving the first signal, the second node may perform de-scrambling processing, extract the target information from the first signal, and obtain, through parsing, the pilot signal that is not scrambled.

Therefore, in this embodiment of this application, the first node sends the first signal to the second node at the first resource position in the plurality of manners. This is not specifically limited herein.

507: The second node determines, based on the first signal, interference caused by the first node to the second node.

After receiving the first signal at the second resource position, the second node determines, based on a signal received strength of the first signal, the interference caused by the first node to the second node, and determines whether the interference caused by the first node to the second node is greater than a preset threshold. The preset threshold may be the interference detection threshold included in the first signal. It should be noted that a specific determining manner in which the second node determines whether the interference caused by the first node to the second node is greater than the preset threshold may include the following:

When the second node detects that the signal strength of the first signal is greater than the interference detection threshold, the second node determines that the interference caused by the first node to the second node is greater than the preset threshold. On the contrary, when the second node detects that the signal strength of the first signal is less than the interference detection threshold, the second node determines that the interference caused by the first node to the second node is less than the preset threshold. The signal strength may be an RSRP of the first signal, an RSSI of the first signal, an SNR of the first signal, another quantization value used to reflect the signal strength of the first signal, or the like. This is not specifically limited herein.

Optionally, a longer signal transmission distance indicates higher noise interference and attenuation of a signal at a receiver, and consequently, a signal strength of the signal decreases progressively. Therefore, based on such an understanding, a smaller physical distance between the first node and the second node indicates a smaller path loss value of the first signal from the first node to the second node and higher interference caused by the first node to the second node. Therefore, the second node calculates a path loss value of the first signal from the first node to the second node. For example, a specific calculation manner may be as follows:
Path loss = TX power + Gr + Gt - RSSI, where TX power indicates a transmit power of the first signal, Gr indicates a receive antenna gain, Gt indicates a transmit antenna gain, RSSI indicates the signal received strength of the first signal, and Gr and Gt are preset values. When the interference detection threshold included in the first signal is the path loss value, the preset threshold may alternatively be a value negatively correlated with the interference detection threshold. To be specific, when the path loss is less than the interference detection threshold, the second node determines that the interference caused by the first node to the second node is greater than the preset threshold. On the contrary, when the path loss is greater than the interference detection threshold, the second node determines that the interference caused by the first node to the second node is less than the preset threshold.

In conclusion, the interference caused by the first node to the second node may be determined from different perspectives by using the interference detection threshold. Therefore, correspondingly, the second node determines, in a plurality of manners, whether the interference caused by the first node to the second node is greater than the preset threshold. This is not specifically limited herein.

508: When the interference caused by the first node to the second node is greater than the preset threshold, the second node transmits a signal based on the first signal.

The second node determines that when the first node sends the first signal, the interference to the second node meets a preset condition, and the time resource that needs to be occupied by the first node to perform the backhaul transmission collides with a time resource that needs to be occupied by the second node to perform the backhaul transmission. To be specific, the time resource that needs to be occupied by the first node to perform the backhaul transmission and the time resource that needs to be occupied by the second node to perform the backhaul transmission overlap or partially overlap in time domain, and the receiving/sending status of the first node during the backhaul transmission is different from the receiving/sending status of the second node during the backhaul transmission, for example, the first node receives a signal during the backhaul transmission, and the second node sends a signal during the backhaul transmission. In this case, the second node may perform avoidance processing. For example, at the time resource position indicated by the first signal, the second node does not use a beam on which the first signal is received to transmit a signal, or the second node may adjust a beam on which the first signal is received, for example, reduce a signal gain, so that the cross-link interference between the first node and the second node is less than a preset threshold of the first node or the second node when the second node uses the beam on which the first signal is received to transmit the signal at the time resource position indicated by the first signal. It may be understood that on another time resource, signal transmission of the second node is not affected by the first signal. The another time resource is a resource other than the time resource that needs to be occupied by the first node to perform the backhaul transmission.

Optionally, when the first signal further includes the information about the periodicity for performing the backhaul transmission by the first node, the second node may further record at least the following information: the information about the time resource that needs to be occupied by the first node to perform the backhaul transmission, the information about the periodicity for performing the backhaul transmission by the first node, and information about the beam used by the second node to receive the first signal.

It should be noted that when the interference caused by the first node to the second node is less than the preset threshold, the second node performs another step.

If the second node determines that when the first node sends the first signal, the interference to the second node is less than the preset threshold; or the time resource that needs to be occupied by the first node to perform the backhaul transmission and the time resource that needs to be occupied by the second node to perform the backhaul transmission do not overlap; or the receiving/sending status of the first node during the backhaul transmission is the same as the receiving/sending status of the second node during the backhaul transmission, for example, the first node is in the receiving state when performing the backhaul transmission, and the second node is also in the receiving state when performing the backhaul transmission, the second node determines that the second node is not affected by the first signal, to be specific, the second node may perform the backhaul transmission and access transmission based on the transmission time information configured by the base station. To be specific, when the first node performs the backhaul transmission, there is no cross-link interference between the first node and the second node.

It may be understood that, when the to-be-protected transmission is access transmission, steps performed by the first node and the second node are similar to the steps performed by the first node and the second node in the flowchart shown in FIG. 5a. Details are not described herein again.

It should be noted that in the prior art, each node may separately measure a channel state between the node and another node, obtain channel state information (channel state information, CSI), and feed back the channel state information to a base station or an upper-level node, so that the base station or the upper-level node performs centralized scheduling, to be specific, the base station or the upper-level node configures a radio resource position that needs to be used by each node to perform backhaul transmission or access transmission. However, a process of obtaining the CSI is relatively complex, and a specific channel resource is occupied. When there are a relatively large quantity of nodes in a wireless network and a channel changes relatively fast, high overheads are caused for CSI feedback. However, in this embodiment of this application, when the first node needs to perform the to-be-protected transmission such as the backhaul transmission, the first node first sends the first signal in a broadcast manner, to notify another node (namely, the second node) in the wireless network of a time resource position that needs to be occupied by the first node to perform the to-be-protected transmission. When determining, based on the first signal, that the first node causes interference to the second node, the second node may perform the avoidance processing at the time resource position indicated by the first signal, to ensure that when performing the backhaul transmission or the access transmission, the first node is free from the cross-link interference between the second node and the first node. Particularly, the first node may send the first signal only once or send the first signal once at an interval of one periodicity, to ensure that the to-be-protected transmission is not interfered with. For example, the first node broadcasts the first signal once every 10 ms, and a width of a subcarrier in a high frequency band is 120 kHz or 240 kHz. A minimum time granularity, namely, a transmission time interval (transmission time interval, TTI), that is used for resource scheduling and that corresponds to 120 kHz is 0.125 ms, and it may be understood as one subframe length. To be specific, the first node sends the first signal once at an interval of 80 or more subframes. Therefore, in this embodiment of this application, when the cross interference is avoided, cross-link interference management overheads can be reduced without complex and frequent pilot resource scheduling.

The foregoing describes the signal transmission method applied to the relay technology in the embodiments of this application. The following describes a communications device in the embodiments of this application. With reference to FIG. 6, in an embodiment of the communications device in the embodiments of this application, the communications device may be configured as the foregoing second node and include:
a first transceiver unit 601, configured to receive a first signal sent by a first node, where the first signal includes information about a time resource that needs to be occupied by the first node to perform backhaul transmission, and a receiving/sending status of the first node during the backhaul transmission;
a second transceiver unit 602, configured to: when the receiving/sending status of the first node during the backhaul transmission is different from a receiving/sending status of the second node during backhaul transmission, receive/send a signal on a resource other than the time resource that needs to be occupied by the first node to perform the backhaul transmission.

FIG. 7 shows another embodiment of a communications device according to an embodiment of this application. The communications device may be configured as the foregoing first node and include:
a generation unit 701, configured to generate a first signal based on information about backhaul transmission of the first node, where the first signal includes information about a time resource that needs to be occupied by the first node to perform the backhaul transmission, and a receiving/sending status of the first node during the backhaul transmission; and
a transceiver unit 702, configured to send the first signal.

Optionally, the communications device further includes a determining unit 703, configured to determine a first resource position. The transceiver unit 702 is specifically configured to send the first signal at the first resource position.

In FIG. 6 and FIG. 7, the communications devices in the embodiments of this application are separately described in detail from the perspective of a modular function entity. The following describes the communications device in the embodiments of this application in detail from the perspective of hardware processing.

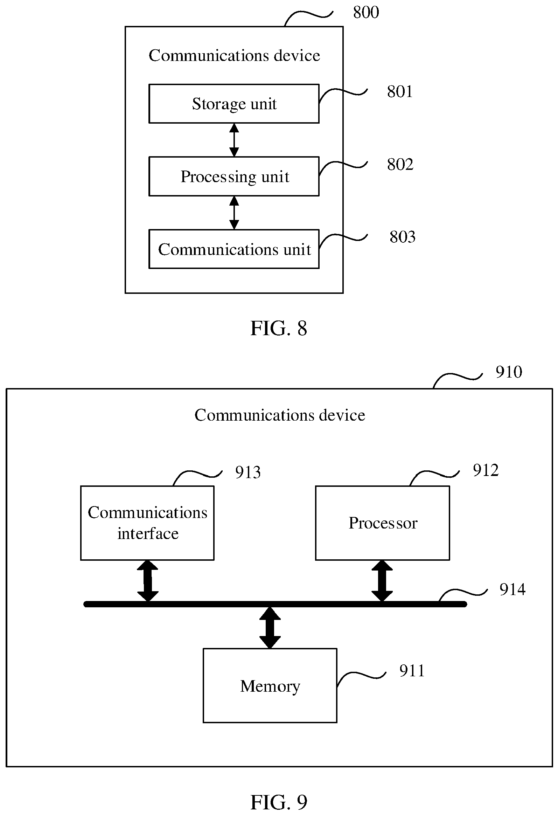

Refer to FIG. 8. When an integrated unit is used, FIG. 8 is a possible schematic structural diagram of a communications device 800. The communications device 800 includes a processing unit 802 and a communications unit 803. The processing unit 802 is configured to control and manage an action of the communications device. The communications device 800 may further include a storage unit 801, configured to store program code and data that are necessary for the communications device 800.

In an embodiment, the communications device 800 may be the foregoing second node. For example, the processing unit 802 is configured to support the second node in performing step 504, step 505, step 507, and step 508 in FIG. 5a, and/or another process used for the technology described in this specification. The communications unit 803 is configured to support communication between the second node and another device. For example, the communications unit 803 is configured to support the second node in performing step 506 in FIG. 5a.

In another embodiment, the communications device 800 may be the foregoing first node. For example, the processing unit 802 is configured to support the first node in performing step 501 to step 503 in FIG. 5a, and/or another process used for the technology described in this specification. The communications unit 803 is configured to support communication between the first node and another device. For example, the communications unit 803 is configured to support the first node in performing step 506 in FIG. 5a.

The processing unit 802 may be a processor or a controller, such as may be a central processing unit (central processing unit, CPU), a general purpose processor, a digital signal processor (digital signal processor, DSP), an application-specific integrated circuit (application-specific integrated circuit, ASIC), a field programmable gate array (field programmable gate array, FPGA), or another programmable logic component, a transistor logical device, a hardware component, or any combination thereof. The processor may implement or execute various example logical blocks, modules, and circuits described with reference to content disclosed in this application. Alternatively, the processor may be a combination of implementing a computing function, for example, a combination of one or more microprocessors, or a combination of the DSP and a microprocessor. The communications unit 803 may be a communications interface, a transceiver, a transceiver circuit, or the like. The communications interface is a general term, and may include one or more interfaces, for example, a transceiver interface. The storage unit 801 may be a memory.

When the processing unit 802 may be a processor, the communications unit 803 may be a communications interface, and the storage unit 801 may be a memory, with reference to FIG. 9, a communications device 910 includes a processor 912, a communications interface 913, and a memory 911. Optionally, the communications device 910 may further include a bus 914. The communications interface 913, the processor 912, and the memory 911 may be connected to each other by using the bus 914. The bus 914 may be a peripheral component interconnect (peripheral component interconnect, PCI) bus, an extended industry standard architecture (extended industry standard architecture, EISA) bus, or the like. The bus 914 may be classified into an address bus, a data bus, a control bus, and the like. For ease of representation, only one thick line is used to represent the bus in FIG. 9, but this does not mean that there is only one bus or only one type of bus.

Similarly, in an embodiment, the communications device 910 may be configured to indicate a step of the foregoing second node. In another embodiment, the communications device 910 may be configured to indicate a step of the foregoing first node. Details are not described herein.

An embodiment of this application further provides an apparatus. The apparatus may be a chip. The apparatus includes a memory, and the memory is configured to store an instruction. When the instruction stored in the memory is executed by a processor, the processor is enabled to perform a part or all of the steps of the second node in the signal transmission method applied to the relay technology in the embodiment in FIG. 5a, for example, step 504, step 505, step 507, and step 508 in FIG. 5a, and/or another process used for the technology described in this specification; or the processor is enabled to perform a part or all of the steps of the first node in the signal transmission method applied to the relay technology in the embodiment in FIG. 5a, for example, step 501 to step 503 in FIG. 5a, and/or another process used for the technology described in this specification.

It should be noted that the communications device in the embodiments of this application may be configured as the foregoing first node or the foregoing second node, and the first node and the second node may be network devices, relay nodes, terminals, or the like. Therefore, types of the first node and the second node are not specifically limited herein. The following separately describes a network device, a terminal, and a relay node.

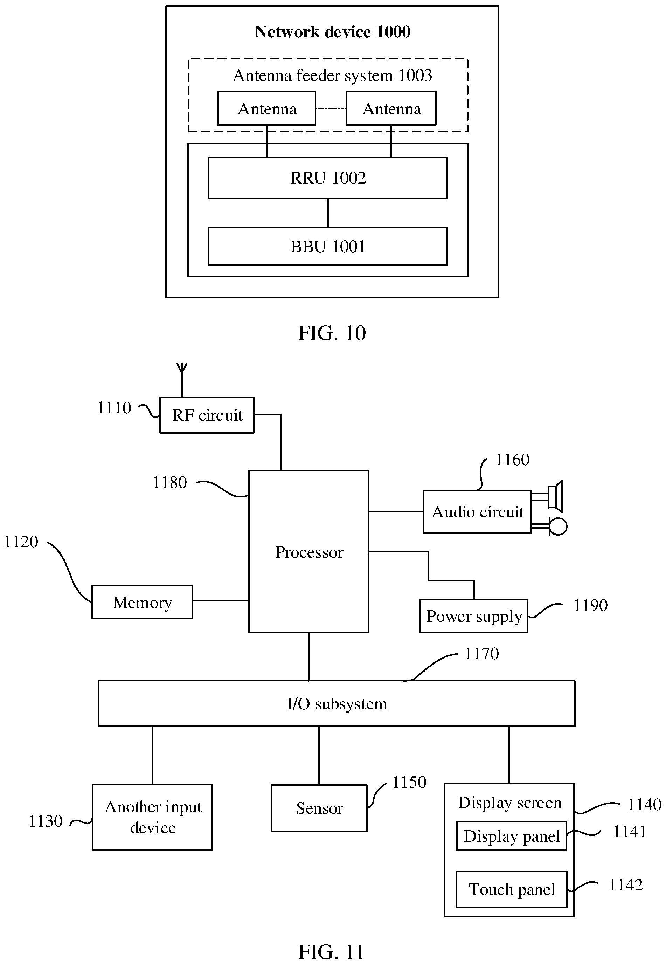

FIG. 10 is a schematic structural diagram of a network device 1000 according to an embodiment of this application. The network device 1000 may include a building baseband unit (building baseband unit, BBU) 1001 and a remote radio unit (remote radio unit, RRU) 1002. The RRU 1002 is connected to an antenna feeder system 1003. The BBU 1001 and the RRU 1002 may be disassembled for use as required. For example, the RRU may be remotely located in a cloud platform. The BBU 1001 is configured to: implement operation and maintenance of the entire network device or a relay node, implement signaling processing, radio resource management, and a transmission interface to a packet core network, and implement main control functions of a physical layer, a media access control layer, L3 signaling, and operation and maintenance. The RRU 1002 is configured to: implement conversion between a baseband signal and a radio frequency signal, implement demodulation of a radio received signal and modulation and power amplification of a sent signal, and the like. The antenna feeder system 1003 may include a plurality of antennas, and is configured to implement receiving and sending of a radio air interface signal. Persons skilled in the art may understand that, in a specific implementation process, the network device may further use another general-purpose hardware structure, but is not limited to a hardware structure shown in FIG. 10. A function of the network device in the embodiments of this application may also be implemented via a cloud access network (CloudRAN) device. A distributed networking manner, a centralized networking manner, or a combination of the foregoing two networking manners may be used for the CloudRAN.

When the communications device is configured as a first node, the BBU 1001 is configured to perform steps 501 to 503 in FIG. 5a, and/or another process used for the technology described in this specification. The antenna feeder system 1003 is configured to: perform step 506 in FIG. 5a, and/or communicate with another device. When the communications device is configured as a second node, the BBU 1001 is configured to perform step 504, step 505, step 507, and step 508 in FIG. 5a, and/or another process used for the technology described in this specification. The antenna feeder system 1003 is configured to: perform step 506 in FIG. 5a, and/or communicate with another device.

FIG. 11 is a schematic structural diagram of a terminal according to an embodiment of this application. Using an example in which the terminal is a mobile phone, the mobile phone may include components such as an RF (radio frequency, radio frequency) circuit 1110, a memory 1120, another input device 1130, a display screen 1140, a sensor 1150, an audio circuit 1160, an I/O subsystem 1170, a processor 1180, and a power supply 1190. The following describes each constituent component of the mobile phone in detail with reference to FIG. 11.

The processor 1180 is separately connected to the RF circuit 1110, the memory 1120, the audio circuit 1160, and the power supply 1190. The I/O subsystem 1170 is separately connected to the another input device 1130, the display screen 1140, and the sensor 1150. The RF circuit 1110 may be configured to receive and send voice or data information. Particularly, after receiving downlink information from a network device, the RF circuit 1110 sends the downlink information to the processor 1180 for processing. The memory 1120 may be configured to store a software program and a module. The processor 1180 executes various function applications and data processing of the mobile phone by running the software program and the module that are stored in the memory 1120. The another input device 1130 may be configured to: receive inputted digit or character information, and generate a keyboard signal input related to user settings and function control of the mobile phone. The display screen 1140 may be configured to display information inputted by a user or information provided for a user, and various menus of the mobile phone, and may further receive a user input. The display screen 1140 may include a display panel 1141 and a touch panel 1142. The sensor 1150 may be an optical sensor, a movement sensor, or another sensor. The audio circuit 1160 may provide an audio interface between the user and the mobile phone. The I/O subsystem 1170 is configured to control an external input/output device, and the external device may include another device input controller, a sensor controller, and a display controller. The processor 1180 is a control center of the mobile phone, connects various components of the entire mobile phone through various interfaces and lines, and executes various functions and data processing of the mobile phone by running or executing the software program and/or the module stored in the memory 1120 and invoking data stored in the memory 1120, to perform overall monitoring on the mobile phone. The power supply 1190 (for example, a battery) is configured to supply power to the foregoing components. The power supply may be logically connected to the processor 1180 by using a power management system, to implement functions such as charging, discharging, and power consumption management by using the power management system.

Although not shown, the mobile phone may further include function modules or components such as a camera and a Bluetooth module. Details are not described herein. Persons skilled in the art may understand that a structure of the mobile phone shown in FIG. 11 constitutes no limitation on the mobile phone, and the mobile phone may include more or fewer components than those shown in the figure, may combine some components, or may have a different component arrangement.

When the communications device is configured as a first node, the processor 1180 is configured to perform steps 501 to 503 in FIG. 5a, and/or another process used for the technology described in this specification. The I/O subsystem 1170 is configured to: perform step 506 in FIG. 5a, and/or communicate with another device. When the communications device is configured as a second node, the processor 1180 is configured to: perform step 504, step 505, step 507, and step 508 in FIG. 5a, and/or another process used for the technology described in this specification. The I/O subsystem 1170 is configured to: perform step 506 in FIG. 5a, and/or communicate with another device.

It should be noted that in the embodiments of this application, a relay node may be a relay base station, for example, a micro base station. For a structure of the relay node, refer to the structure of the network device shown in FIG. 10. In some embodiments, a relay node may alternatively be a terminal that provides a relay function. For a structure of the relay node, refer to the structure of the terminal shown in FIG. 11.

It may be clearly understood by persons skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The foregoing integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make replacements to some technical features thereof, without departing from the scope of the appended claims.

## Claims

1. A signal transmission method for mitigating cross-link interference between a first relay node and a second relay node in a wireless network, wherein the first relay node and the second relay node are integrated access and backhaul, IAB, relay nodes, the method comprising:
receiving (506), by the second relay node, a first signal sent by the first relay node, wherein the first signal comprises information about a time resource that needs to be occupied by the first relay node to perform first backhaul transmission, and a receiving/sending status of the first relay node during the first backhaul transmission; and
determining (507), based on the first signal, interference caused by the first relay node to the second relay node;
if the time resource that is indicated by the first signal and that needs to be occupied by the first relay node to perform the backhaul transmission overlaps or partially overlaps a time resource that needs to be occupied by the second relay node to perform second backhaul transmission and the interference caused by the first node to the second node is greater than a preset interference detection threshold, the second relay node performing the second backhaul transmission (508)on a resource other than the time resource that needs to be occupied by the first relay node to perform the first backhaul transmission.

2. The method according to claim 1, wherein the first signal comprises a pilot signal, and the pilot signal carries the information about the time resource that needs to be occupied by the first relay node to perform the first backhaul transmission, and the receiving/sending status of the first relay node during the first backhaul transmission.

3. The method according to claim 1, wherein the first signal comprises a pilot signal, the information about the time resource that needs to be occupied by the first relay node to perform the first backhaul transmission, and the receiving/sending status of the first relay node during the first backhaul transmission.

4. The method according to claim 2 or 3, wherein the first signal further comprises but is not limited to one or more of the following information: information about a periodicity for performing the first backhaul transmission by the first relay node, and the preset interference detection threshold.

5. The method according to claim 1, wherein the first signal is received through a broadcast channel.

6. The method according to claim 5, wherein a resource position comprising a plurality of sub-resource positions is configured and the second relay node receives a respective first signal from each of a plurality of first relay nodes in the wireless network in a respective one of the sub-resources.

7. A communications device for mitigating cross-link interference between a first relay node and a second relay node in a wireless relay technology, wherein the first relay node and the second relay node are integrated access and backhaul, IAB, relay nodes, wherein the communications device is applied to the second relay node and comprises:
a first transceiver unit (601), configured to receive a first signal sent by a first relay node, wherein the first signal comprises information about a time resource that needs to be occupied by the first relay node to perform first backhaul transmission, and a receiving/sending status of the first relay node during the first backhaul transmission,
wherein the communications device is configured to determine, based on the first signal, interference caused by the first node to the second node;
the communications device further comprising:
a second transceiver unit (602), configured to: if the time resource that is indicated by the first signal and that needs to be occupied by the first relay node to perform the backhaul transmission overlaps or partially overlaps a time resource that needs to be occupied by the second relay node to perform second backhaul transmission and the interference caused by the first node to the second node is greater than a preset interference detection threshold, perform the second backhaul transmission on a resource other than the time resource that needs to be occupied by the first relay node to perform the first backhaul transmission.

## Patentansprüche

1. Signalübertragungsverfahren zum Abschwächen von Querverbindungsinterferenzen zwischen einem ersten Relaisknoten und einem zweiten Relaisknoten in einem drahtlosen Netzwerk, wobei der erste Relaisknoten und der zweite Relaisknoten integrierte Zugangs- und Backhaul-Relaisknoten (IAB) sind, wobei das Verfahren Folgendes umfasst:
Empfangen (506), durch den zweiten Relaisknoten, eines ersten Signals, das von dem ersten Relaisknoten gesendet wird, wobei das erste Signal Informationen über eine Zeitressource, die von dem ersten Relaisknoten besetzt werden muss, um eine erste Backhaul-Übertragung auszuführen, und einen Empfangs-/Sendestatus des ersten Relaisknotens während der ersten Backhaul-Übertragung umfasst; und
Bestimmen (507), basierend auf dem ersten Signal, einer Interferenz, die von dem ersten Relaisknoten zu dem zweiten Relaisknoten verursacht wird;
wenn die durch das erste Signal angezeigte Zeitressource, die von dem ersten Relaisknoten belegt werden muss, um die Backhaul-Übertragung durchzuführen, sich mit einer Zeitressource überschneidet oder teilweise überschneidet, die von dem zweiten Relaisknoten belegt werden muss, um die zweite Backhaul-Übertragung durchzuführen, und die von dem ersten Knoten für den zweiten Knoten verursachte Interferenz größer ist als ein voreingestellter Interferenzserkennungsschwellenwert, führt der zweite Relaisknoten die zweite Backhaul-Übertragung (508) auf einer anderen Ressource durch als der Zeitressource, die von dem ersten Relaisknoten belegt werden muss, um die erste Backhaul-Übertragung durchzuführen.

2. Verfahren nach Anspruch 1, wobei das erste Signal ein Pilotsignal umfasst und das Pilotsignal die Information über die Zeitressource, die von dem ersten Relaisknoten zur Durchführung der ersten Backhaul-Übertragung besetzt werden muss, und den Empfangs-/Sendestatus des ersten Relaisknotens während der ersten Backhaul-Übertragung trägt.

3. Verfahren nach Anspruch 1, wobei das erste Signal ein Pilotsignal, die Informationen über die Zeitressource, die von dem ersten Relaisknoten belegt werden muss, um die erste Backhaul-Übertragung durchzuführen, und den Empfangs-/Sendestatus des ersten Relaisknotens während der ersten Backhaul-Übertragung umfasst.

4. Verfahren nach Anspruch 2 oder 3, wobei das erste Signal ferner, jedoch nicht beschränkt auf eine oder mehrere der folgenden Informationen umfasst: Informationen über eine Periodizität zur Durchführung der ersten Backhaul-Übertragung durch den ersten Relaisknoten und den voreingestellten Interferenzerkennungsschwellenwert.

5. Verfahren nach Anspruch 1, **dadurch gekennzeichnet, dass** das erste Signal über einen Broadcast-Kanal empfangen wird.

6. Verfahren nach Anspruch 5, wobei eine Ressourcenposition, die eine Vielzahl von Unterressourcenpositionen umfasst, konfiguriert wird und der zweite Relaisknoten ein jeweiliges erstes Signal von jedem einer Vielzahl von ersten Relaisknoten im drahtlosen Netzwerk in einer jeweiligen der Unterressourcen empfängt.

7. Kommunikationsvorrichtung zum Abschwächen von Querverbindungsinterferenzen zwischen einem ersten Relaisknoten und einem zweiten Relaisknoten in einer drahtlosen Relaistechnologie, wobei der erste Relaisknoten und der zweite Relaisknoten integrierte Zugangs- und Backhaul-, IAB-, Relaisknoten sind, wobei die Kommunikationsvorrichtung an dem zweiten Relaisknoten angewendet wird und Folendes umfasst:
Empfangen (601), durch den zweiten Relaisknoten, eines ersten Signals, das von dem ersten Relaisknoten gesendet wird, wobei das erste Signal Informationen über eine Zeitressource, die von dem ersten Relaisknoten besetzt werden muss, um eine erste Backhaul-Übertragung auszuführen, und einen Empfangs-/Sendestatus des ersten Relaisknotens während der ersten Backhaul-Übertragung umfasst,
wobei die Kommunikationsvorrichtung konfiguriert ist, um, basierend auf dem ersten Signal, Interferenzen zu bestimmen, die durch den ersten Knoten zu dem zweiten Knoten verursacht werden;
die Kommunikationsvorrichtung, ferner umfassend:
eine zweite Transceivereinheit (602), die konfiguriert ist, um: wenn die durch das erste Signal angezeigte Zeitressource, die von dem ersten Relaisknoten belegt werden muss, um die Backhaul-Übertragung durchzuführen, sich mit einer Zeitressource überschneidet oder teilweise überschneidet, die von dem zweiten Relaisknoten belegt werden muss, um die zweite Backhaul-Übertragung durchzuführen, und die von dem ersten Knoten für den zweiten Knoten verursachte Interferenz größer ist als ein voreingestellter Interferenzerkennungsschwellenwert, die zweite Backhaul-Übertragung auf einer anderen Ressource durchführen als der Zeitressource, die von dem ersten Relaisknoten belegt werden muss, um die erste Backhaul-Übertragung durchzuführen.

## Revendications

1. Procédé d'émission de signal pour atténuer une interférence de liaison croisée entre un premier noeud relais et un second noeud relais dans un réseau sans fil, dans lequel le premier noeud relais et le second noeud relais sont des noeuds relais d'accès et de liaison terrestre intégrés, IAB, le procédé comprenant :
la réception (506), par le second noeud relais, d'un premier signal envoyé par le premier noeud relais, dans lequel le premier signal comprend des informations concernant une ressource temporelle qui doit être occupée par le premier noeud relais pour exécuter une première émission de liaison terrestre, et un état de réception/d'envoi du premier noeud relais pendant la première émission de liaison terrestre ; et
la détermination (507), sur la base du premier signal, d'une interférence provoquée par le premier noeud relais sur le second noeud relais ;
si la ressource temporelle qui est indiquée par le premier signal et qui doit être occupée par le premier noeud relais pour exécuter l'émission de liaison terrestre chevauche ou chevauche partiellement une ressource temporelle qui doit être occupée par le second noeud relais pour exécuter une seconde émission de liaison terrestre et que l'interférence provoquée par le premier noeud sur le second noeud est supérieure à un seuil de détection d'interférence prédéfini, le second noeud relais exécutant la seconde émission de liaison terrestre (508) sur une ressource autre que la ressource temporelle qui doit être occupée par le premier noeud relais pour exécuter la première émission de liaison terrestre.

2. Procédé selon la revendication 1, dans lequel le premier signal comprend un signal pilote, et le signal pilote transporte les informations concernant la ressource temporelle qui doit être occupée par le premier noeud relais pour exécuter la première émission de liaison terrestre, et l'état de réception/d'envoi du premier noeud relais pendant la première émission de liaison terrestre.

3. Procédé selon la revendication 1, dans lequel le premier signal comprend un signal pilote, les informations concernant la ressource temporelle qui doit être occupée par le premier noeud relais pour exécuter la première émission de liaison terrestre, et l'état de réception/d'envoi du premier noeud relais pendant la première émission de liaison terrestre.

4. Procédé selon la revendication 2 ou 3, dans lequel le premier signal comprend également, mais non exclusivement, une ou plusieurs des informations suivantes : des informations concernant une périodicité pour exécuter la première émission de liaison terrestre par le premier noeud relais, et le seuil de détection d'interférence prédéfini.

5. Procédé selon la revendication 1, dans lequel le premier signal est reçu à travers un canal de diffusion.

6. Procédé selon la revendication 5, dans lequel une position de ressource comprenant une pluralité de positions de sous-ressources est configurée et le second noeud relais reçoit un premier signal respectif de chacun d'une pluralité de premiers noeuds relais dans le réseau sans fil dans une ressource respective des sous-ressources.

7. Dispositif de communication pour atténuer une interférence de liaison croisée entre un premier noeud relais et un second noeud relais dans une technologie de relais sans fil, dans lequel le premier noeud relais et le second noeud relais sont des noeuds de relais d'accès et de liaison terrestre intégrés, IAB, dans lequel le dispositif de communication est appliqué au second noeud relais et comprend :
une première unité d'émission-réception (601), configurée pour recevoir un premier signal envoyé par un premier noeud relais, dans lequel le premier signal comprend des informations concernant une ressource temporelle qui doit être occupée par le premier noeud relais pour exécuter une première émission de liaison terrestre, et un état de réception/d'envoi du premier noeud relais pendant la première émission de liaison terrestre, dans lequel le dispositif de communication est configuré pour déterminer, sur la base du premier signal, une interférence provoquée par le premier noeud sur le second noeud ;
le dispositif de communication comprenant également :
une seconde unité d'émission-réception (602), configurée pour : si la ressource temporelle qui est indiquée par le premier signal et qui doit être occupée par le premier noeud relais pour exécuter l'émission de liaison terrestre chevauche ou chevauche partiellement une ressource temporelle qui doit être occupée par le second noeud relais pour exécuter une seconde émission de liaison terrestre et que l'interférence provoquée par le premier noeud sur le second noeud est supérieure à un seuil de détection d'interférence prédéfini, exécuter la seconde émission de liaison terrestre sur une ressource autre que la ressource temporelle qui doit être occupée par le premier noeud relais pour exécuter la première émission de liaison terrestre.
